# EUROPEAN PATENT APPLICATION

(11) **EP 4 703 707 A1**
(43) Date of publication of application: **04.03.2026**
(21) Application number: 25198292.2
(22) Date of filing: 26.08.2025
(51) Int. Cl.: G01N 15/10, G01N 15/1429, G01N 15/14

(54) **METHODS AND COMPOSITIONS FOR FLOW CYTOMETER CALIBRATION**

(30) Priority: 27.08.2024 US 202463687668 P
(71) Applicant: Becton Dickinson and Company, Franklin Lakes, NJ 07417-1880 (US)
(72) Inventor: Hidalgo, Lorena, Franklin Lakes, 07417-1880 (US); Tyznik, Aaron Jacob, Franklin Lakes, 07417-1880 (US); Widmann, Stephanie J., Franklin Lakes, 07417-1880 (US)
(74) Representative: Arnold & Siedsma

(57) **Abstract**

The present disclosure provides improved and useful techniques for cross-standardization of flow cytometry instruments and, particularly, spectral flow cytometry instruments. Aspects of the disclosure include methods of calibrating a flow cytometer having a plurality of fluorescence channels. Methods of interest utilize calibration sets of bead populations, wherein each bead population of the calibration set includes a different fluorophore attached to a surface thereof and the calibration set includes a number of bead populations that is less than the number of fluorescence channels of the flow cytometer. Flow cytometers, non-transitory computer-readable storage media, and kits including, e.g., calibration sets of bead populations for carrying out the subject methods are also provided.

## Description

### CROSS-REFERENCE TO RELATED APPLICATION

This application claims priority to the filing date of United States Provisional Patent Application Serial No. 63/687,668 filed August 27, 2024.

### INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops. The drops containing particles of interest are electrically charged and deflected into a collection tube by passage through an electric field. Typically, the linearly segregated particles in the stream are characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left un-charged.

In flow cytometry, standardization is essential in order to ensure that variations in the light collected and quantified by a flow cytometer are inherent to a sample and not, e.g., the result of instrument configuration. Standardization is especially important in clinical cytometry, where data from different flow cytometers and laboratories are compared in order to, e.g., monitor frequencies of immune cell populations, or the fluorescence intensity of cell markers used for the diagnosis and monitoring of disease conditions. One major source of variation across flow cytometer experiments that must be addressed via standardization is instrument hardware.

To compensate for variations of instrument hardware, flow cytometers are typically calibrated using hard dye beads to set a target Mean Fluorescence Intensity (MFI) for each detector or channel of the cytometer. Hard dye beads entrap fluorescent polymers that, upon excitation with a wide array of wavelengths, emit fluorescence across a broad spectrum. These beads are widely used to set up instruments to the same conditions, which facilitates comparison across experiments. However, the process of standardization is time consuming and takes technical expertise in error management and variability-as a wide variety of subtle differences in, e.g., instrument hardware, must be accounted for. Further, with the development of spectral flow cytometers, which utilize large numbers of detectors to quantify light across the entire fluorescence spectrum emitted by fluorescence particles (e.g., fluorophores) of interest, the process of standardization has grown even more strenuous and complex.

### SUMMARY

Thus, there is a need for improved and useful techniques for cross-standardization of flow cytometry instruments and, particularly, spectral cytometry instruments. The present inventors realized that, as hard dye beads respond in a similar manner to various subtle differences of instrument hardware (e.g., laser wavelength, laser power, etc.), it is often difficult to account for the specific variations of a particular instrument or experiment using such beads. However, while fluorophores respond in a much more distinctive manner to these subtle differences, the nature of spectral flow cytometers make it extremely arduous to implement fluorophores for the calibration of spectral instruments using conventional approaches. As such, the inventors realized that a process for efficiently and effectively utilizing fluorophores for spectral instrument calibration could enable the creation of such improved and useful cross-standardization techniques. Accordingly, embodiments of the present disclosure, providing methods and compositions for calibrating spectral instruments using fluorophores, satisfy the aforementioned need.

Aspects of the disclosure include methods of calibrating a flow cytometer characterized by a plurality of fluorescence channels. Methods of interest include: irradiating a control composition including a calibration set of bead populations with one or more light sources of the flow cytometer, wherein each bead population of the calibration set includes a different fluorophore attached to a surface thereof and the calibration set includes a number of bead populations that is less than the number of fluorescence channels of the flow cytometer; measuring data signals generated by the plurality of fluorescence channels of the flow cytometer for the calibration set of bead populations; calculating a quantitative metric of fluorescence intensity for each of at least a portion of the plurality of fluorescence channels based on the data signal generated for a bead population of the calibration set having the highest fluorescence intensity of the populations of the set for the fluorescence channel; and adjusting one or more fluorescence channels based on the quantitative fluorescence metric calculated for each of the one or more channels. In some embodiments, the flow cytometer is a spectral flow cytometer.

In certain embodiments, the quantitative metric of fluorescence intensity is the mean fluorescence intensity. In these cases, the mean fluorescence intensity calculated for each fluorescence channel may be 500 or more such as, e.g., 1,000 or more, or 2,000 or more, or 5,000 or more. In some embodiments, the mean fluorescence intensity includes the arithmetic mean, the geometric mean, and/or the median of a plurality of fluorescence intensity values measured for a given bead population and fluorescence channel.

In certain embodiments, the one or more fluorescence channels are adjusted such that a subsequent quantitative fluorescence metric calculated for each of the one or more channels is within a predetermined threshold value of a standardized application setting generated for the fluorescence channel and its corresponding highest fluorescence intensity bead population of the calibration set. In some embodiments, the adjusting includes changing a voltage and/or an electronic gain setting of one or more fluorescence channels.

In certain embodiments, a bead population of the calibration set includes beads having: a core; a fluorophore; and a linker attached to the fluorophore and configured to bind to the core. In some embodiments, the linker is bound to the core such that, e.g., the fluorophore is covalently bound to the core via the linker. In some cases, the core includes an antigen, and the linker includes an antibody. In some embodiments, the core includes polystyrene.

In certain embodiments, each bead population of the calibration set has the highest fluorescence intensity of the populations of the set for at least one fluorescence channel of the flow cytometer. In some embodiments, the number of bead populations of the calibration set is half the number of fluorescence channels or less such as, e.g., a quarter of the number of fluorescence channels or less, or an eighth of the number of fluorescence channels or less. In some embodiments, the plurality of fluorescence channels includes 10 or more fluorescence channels such as, e.g., 40 or more fluorescence channels, or 60 or more fluorescence channels.

In certain embodiments, the plurality of fluorescence channels includes at least one fluorescence channel for each of two or more emission spectrums. In some embodiments, the one or more light sources of the flow cytometer include a plurality of lasers, each laser emitting a different wavelength. For example, the plurality of lasers may include at least one laser emitting in the ultraviolet (UV) spectrum, the violet spectrum, the blue spectrum, the green/yellow spectrum, and the red spectrum. In some embodiments, the plurality of fluorescence channels includes at least one fluorescence channel for each of two or more excitation spectrums. In some cases, each fluorescence channel of the plurality of fluorescence channels differs in its respective excitation or emission spectrum by 10 nm or more. In some embodiments, for each laser of the flow cytometer the plurality of fluorescence channels is configured to detect a combined emission spectrum in a range from 20 nm or less longer than a wavelength of the laser to at least 810 nm. In some cases, for each laser of the flow cytometer the calibration set of bead populations includes one or more fluorophores having an excitation spectrum including a wavelength of the laser and a combined emission spectrum that spans the full fluorescence spectrum from 20 nm or less longer than the wavelength of the laser to at least 810 nm.

In certain embodiments, the method further includes generating a set of standardized application settings for at least the portion of the plurality of fluorescence channels by calculating a quantitative fluorescence metric for each respective fluorescence channel and its corresponding highest fluorescence intensity bead population of the calibration set. In these cases, two or more flow cytometers of the same model may be used to generate the set of standardized application settings. In some embodiments, the method further includes using the generated set of standardized application settings to compare data generated by different flow cytometers. In some embodiments, the method further includes using the generated set of standardized application settings to reduce variations across different flow cytometers.

In another aspect, flow cytometers configured to perform the calibration methods, e.g., as described above and herein, are provided. Flow cytometers of interest include: one or more light sources configured to irradiate beads in a flow stream of the flow cytometer; a plurality of fluorescence channels configured to generate data signals from light received from the irradiated beads; a processor including memory operably coupled to the processor wherein the memory includes instructions stored thereon, which when executed by the processor, cause the processor to: measure data signals generated by the plurality of fluorescence channels for a control composition including a calibration set of bead populations, wherein each bead population of the calibration set includes a different fluorophore attached to a surface thereof and the calibration set includes a number of bead populations less than the number of fluorescence channels; calculate a quantitative metric of fluorescence intensity for each of at least a portion of the plurality of fluorescence channels based on the data signal generated for a bead population of the calibration set having the highest fluorescence intensity of the populations of the set for the fluorescence channel; and adjust one or more fluorescence channels based on the quantitative fluorescence metric calculated for each of the one or more channels.

In another aspect, non-transitory computer-readable storage media including instructions stored thereon for performing the calibration methods, e.g., as described above and herein, are provided. Aspects of the disclosure further include kits containing said non-transitory computer readable storage media and/or control compositions including calibration sets of bead populations, e.g., as described above and herein.

### BRIEF DESCRIPTION OF THE FIGURES

The disclosure may be best understood from the following detailed description when read in conjunction with the accompanying drawings. Included in the drawings are the following figures:
**FIG. 1A** depicts a flow diagram for practicing methods of calibrating a flow cytometer according to certain embodiments. **FIG. 1B** depicts a flow diagram for practicing methods of generating a set of standardized application settings used to calibrate a flow cytometer according to certain embodiments. **FIG. 1C** illustrates emission profiles for a calibration set of bead populations overlaid across a plurality of fluorescence channels of a flow cytometer according to certain embodiments.
**FIG. 2** presents a flow cytometric system according to certain embodiments.
**FIG. 3** depicts an image-enabled particle sorter according to certain embodiments.
**FIG. 4** depicts a functional block diagram of a particle analysis system according to certain embodiments.
**FIG. 5** depicts a depicts a functional block diagram for one example of a control system according to certain embodiments.
**FIG. 6A-6B** depict schematic drawings of a particle sorter system according to certain embodiments.
**FIG. 7** depicts aspects of a computer-controlled system according to certain embodiments.

### DETAILED DESCRIPTION

The present disclosure provides methods of calibrating a flow cytometer having a plurality of fluorescence channels. Methods of interest include: irradiating a control composition including a calibration set of bead populations with one or more light sources of the flow cytometer, wherein each bead population of the calibration set includes a different fluorophore attached to a surface thereof and the calibration set includes a number of bead populations that is less than the number of fluorescence channels of the flow cytometer; measuring data signals generated by the plurality of fluorescence channels of the flow cytometer for the calibration set of bead populations; calculating a quantitative metric of fluorescence intensity for each of at least a portion of the plurality of fluorescence channels based on the data signal generated for a bead population of the calibration set having the highest fluorescence intensity of the populations of the set for the fluorescence channel; and adjusting one or more fluorescence channels based on the quantitative fluorescence metric calculated for each of the one or more channels. Flow cytometers, non-transitory computer-readable storage media, and kits for carrying out the subject methods are also provided.

Before the present disclosure is described in greater detail, it is to be understood that this disclosure is not limited to particular embodiments described, as such may, of course, vary. It is also to be understood that the terminology used herein is for the purpose of describing particular embodiments only, and is not intended to be limiting, since the scope of the present disclosure will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

All publications and patents cited in this specification are herein incorporated by reference as if each individual publication or patent were specifically and individually indicated to be incorporated by reference and are incorporated herein by reference to disclose and describe the methods and/or materials in connection with which the publications are cited. The citation of any publication is for its disclosure prior to the filing date and should not be construed as an admission that the present disclosure is not entitled to antedate such publication by virtue of prior disclosure. Further, the dates of publication provided may be different from the actual publication dates, which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope of the present disclosure. Any recited method can be carried out in the order of events recited or in any other order which is logically possible.

While the system and method has or will be described for the sake of grammatical fluidity with functional explanations, it is to be expressly understood that the claims, , are not to be construed as necessarily limited in any way by the construction of "means" or "steps" limitations, but are to be accorded the full scope of the meaning and equivalents of the definition provided by the claims under the judicial doctrine of equivalents.

As summarized above, methods of calibrating a flow cytometer (e.g., characterized by a plurality of different fluorescence channels) using a control composition (e.g., characterized by multiple different fluorophores) are provided. In further describing various embodiments of the invention, the subject methods including, e.g., methods for calibrating a flow cytometer, and methods for generating control compositions and/or standardized application settings used to calibrate flow cytometers, are described first in greater detail. Next, flow cytometers, non-transitory computer-readable storage media, and kits including, e.g., calibration sets of bead populations, in each case for practicing the subject methods, are described.

### METHODS OF CALIBRATING FLOW CYTOMETERS

As summarized above, methods of calibrating a flow cytometer, wherein the flow cytometer includes a plurality of different fluorescence channels, are provided. Aspects of the methods include: irradiating a control composition including a calibration set of bead populations with one or more light sources of the flow cytometer, wherein each bead population of the calibration set includes a different fluorophore attached to a surface thereof and the calibration set includes a number of bead populations that is less than the number of fluorescence channels of the flow cytometer; measuring data signals generated by the plurality of fluorescence channels of the flow cytometer for the calibration set of bead populations; calculating a quantitative metric of fluorescence intensity for each of at least a portion of the plurality of fluorescence channels based on the data signal generated for a bead population of the calibration set having the highest fluorescence intensity of the populations of the set for the fluorescence channel; and adjusting one or more fluorescence channels based on the quantitative fluorescence metric calculated for each of the one or more channels. In some embodiments, the one or more fluorescence channels are adjusted such that a subsequent quantitative fluorescence metric calculated for each of the one or more channels is within a predetermined threshold value of a standardized application setting generated for the fluorescence channel and its corresponding highest fluorescence intensity bead population of the calibration set.

As described above, embodiments of the methods include calibrating a flow cytometer, wherein the flow cytometer includes a plurality of different fluorescence channels. By "fluorescence channel" is meant a detector configured to measure fluorescence emissions of a specific wavelength range and, e.g., the corresponding optical elements selectively propagating light of the specific range to the detector (such as, e.g., optical filters). The fluorescence channels of the flow cytometer may be configured to measure fluorescence emissions across any number or variety of narrow or broad wavelength ranges. In some embodiments, one or more fluorescence channels of the flow cytometer may be configured to detect the emission maxima of one or more fluorophores of interest. In some embodiments, the plurality of fluorescence channels includes at least one fluorescence channel for each of two or more emission spectra (i.e., corresponding to the emission spectra of two or more fluorophores) such as, e.g., five or more emission spectra, or ten or more emission spectra, or twenty or more emission spectra, or fifty or more emission spectra.

In some embodiments, one or more fluorescence channels of the flow cytometer are configured to, together, effectively measure the full or entire emission spectrum of a fluorophore of interest. For example, the flow cytometer may include a plurality of fluorescence channels configured to measure adjacent (or, e.g., nearly adjacent) wavelength ranges such that all fluorescence emitted by, e.g., fluorescein isothiocyanate (FITC) when irradiated with a 488 nm laser, is measured. In some embodiments, the flow cytometer is a spectral flow cytometer. By "spectral flow cytometer" is meant a flow cytometer that quantifies or measures light across the entire fluorescence spectrum emitted by fluorescence particles (e.g., the full emission spectrum of each fluorescent dye or fluorophore used to stain the cells or particles of an experiment) instead of, e.g., simply measuring a single emission wavelength for each fluorescence particle. In this way, each fluorophore of a given experiment may be identified using their unique spectral signature or, i.e., the unique shape made by measuring their emitted fluorescence at a plurality of wavelengths. For example, the flow cytometer may be a spectral flow cytometer configured to measure the full spectrum of emitted light ranging from 150 nm to 1200 nm, such as from 200 nm to 1000 nm, or 200 nm to 900 nm, or 300 nm to 900 nm, or 350 nm to 900 nm, or 350 nm to 850 nm, or 375 nm to 850 nm, or 400 nm to 850 nm, or 375 nm to 825 nm, or 375 nm to 810 nm, or 375 nm to 800 nm, or 400 nm to 800 nm.

In order to measure fluorescence emitted by a control composition of the disclosure (e.g., as described in greater detail below) using each of the plurality of fluorescence channels, embodiments of the methods include irradiating the control composition with one or more light sources of the flow cytometer. In some embodiments, the one or more light sources of the flow cytometer irradiate the control composition as the composition passes through one or more interrogation points of a flow stream of the cytometer. In these instances, the control composition may pass through a different interrogation point for each light source of the flow cytometer. In some embodiments, the one or more light sources of the flow cytometer include a plurality of lasers, wherein each laser emits a different wavelength. For example, the plurality of lasers may include at least one laser emitting in the ultraviolet (UV) spectrum, the violet spectrum, the blue spectrum, the green/yellow spectrum, and the red spectrum.

In some embodiments, the plurality of fluorescence channels includes at least one fluorescence channel for each of two or more excitation spectra. In these instances, the two or more excitation spectra may correspond to the emission spectra of two or more lasers of the flow cytometer. For example, the flow cytometer might include a first fluorescence channel configured to measure fluorescence emissions ranging from 515 nm to 545 nm for particles irradiated by a 349 nm excitation laser, and a second fluorescence channel configured to measure fluorescence emissions ranging from 515 nm to 545 nm for particles irradiated by a 405 nm excitation laser. In these instances, the 349 nm excitation laser and the 405 nm excitation laser may irradiate particles at different non-overlapping (or, e.g., minimally overlapping) locations along the flow stream. In other words, the interrogation region of each laser, and the position of each corresponding fluorescence channel along the flow stream, may be different. In some embodiments, each fluorescence channel of the plurality of fluorescence channels differs in its respective excitation or emission spectrum by 10 nm or more. For example, two or more fluorescence channels may be configured to measure virtually the same emission spectrum, but may be positioned to measure light from different interrogation points corresponding to wavelengths of excitation light differing by 10 nm or more.

In some embodiments, for each laser of the flow cytometer, the plurality of fluorescence channels is configured to detect a combined emission spectrum in a range from 20 nm or less longer than the wavelength of the laser (e.g., or the longest wavelength of the laser if the laser emits broad spectrum light) to 810 nm or more. In some embodiments, the flow cytometer may be a spectral flow cytometer having two or more different excitation lasers. In other words, the flow cytometer may quantify or measure light across the entire fluorescence spectrum emitted by fluorescence particles for each of two or more different excitation wavelengths. In some embodiments, the flow cytometer may be a spectral flow cytometer including two or more different excitation lasers such as, e.g., five or more different excitation lasers, or eight or more, or ten or more, or fifteen or more. In some embodiments, the flow cytometer may be a spectral flow cytometer including ten or more different fluorescence channels such as, e.g., twenty or more different fluorescence channels, or forty or more, or fifty or more, or one hundred or more, or five hundred or more.

In some cases, the flow cytometer may be a spectral flow cytometer including at least one laser emitting in the ultraviolet (UV) spectrum, the violet spectrum, the blue spectrum, the green/yellow spectrum, and the red spectrum. In these instances, the spectral flow cytometer may, for each laser, be configured to detect a combined emission spectrum in a range from 20 nm or less longer than the wavelength of the laser (such as, e.g., 10 nm or less, or 5 nm or less, or 2 nm or less) to 810 nm or more (such as, e.g., 850 nm or more, 900 nm or more, 1000 nm or more).

As described above, embodiments of the methods include irradiating a control composition with one or more light sources of a flow cytometer, wherein fluorescence emitted by the control composition is measured by each of a plurality of fluorescence channels of the cytometer. Control compositions of the disclosure include a calibration set of bead populations, wherein each bead population of the calibration set includes a different fluorophore attached to a surface thereof. While hard dye beads typically used to calibrate flow cytometry instruments respond in a similar manner to various different subtle changes in instrument hardware and environmental conditions, fluorophores respond in a much more distinctive manner to these subtle differences. For example, while a minor change in either the wavelength of excitation light or the intensity of excitation light might result in a similar change to the fluorescence emitted by a hard dye bead, a minor change in the wavelength of excitation light might result in a significantly different change to the fluorescence emitted by a fluorophore when compared to a minor change in the intensity of excitation light. In this way, by including beads surface-stained with fluorophores (i.e., beads having fluorophores attached to an outer surface thereof), control compositions of the present disclosure, when used for calibration, are able to accurately and effectively account for subtle or minor differences between separate flow cytometer instruments, or the same instrument at different times.

The control compositions of the disclosure, when used for flow cytometer calibration, may be used to account for any number of distinct hardware or environmental differences. In some embodiments, the control compositions of the disclosure may be used to account for any difference in instrument hardware effecting the wavelength or the power (e.g., intensity) of the excitation light emitted by the one or more light sources of the flow cytometer and irradiating the flow stream. For example, the control compositions of the disclosure may be used to account for minor differences in one or more of: the power of a laser, the wavelength of a laser, the alignment of a laser, optical components interacting with the irradiating light (e.g., optical filters), etc. In some embodiments, the control compositions of the disclosure may be used to account for any difference in instrument hardware effecting the collection or detection of fluorescence emitted by particles of the flow stream. For example, the control compositions of the disclosure may be used to account for minor differences in one or more of: the sensitivity of a detector, the alignment of a detector, optical components interacting with the emitted light (e.g., optical filters), etc.

In embodiments of the methods, the calibration set of the control composition includes a number of bead populations that is less than (i.e., smaller than) the number of fluorescence channels of the flow cytometer. In some embodiments, each bead population of the calibration set includes one type or species of fluorophore. In other words, as each bead population of the calibration set includes a different fluorophore attached to a surface thereof, the calibration set of bead populations includes a number of different fluorophores that is smaller than the number of fluorescence channels of the flow cytometer. In some embodiments, the control composition and the calibration set of bead populations include the same number of different fluorophores. In some embodiments, the calibration set of bead populations (including, e.g., the fluorophores of the calibration set) is specifically configured or adapted for the instrument hardware of the flow cytometer. For example, the fluorophores of the calibration set of bead populations may be selected based on the light sources and fluorescence channels of the flow cytometer. In some cases, the calibration set of bead populations is independent of, or unaffected by, the experiments of the flow cytometer. In other words, the same control composition (i.e., including the same bead populations and fluorophores thereof) may be used to calibrate the flow cytometer regardless of the fluorophores used in experiments subsequently run on the cytometer after calibration.

In some embodiments, the fluorophores of the calibration set of bead populations emit fluorescence for each fluorescence channel of the flow cytometer. In other words, for each fluorescence channel and its corresponding excitation/irradiation light source, at least one bead population of the calibration set emits a detectable intensity of light. For example, when the control composition (and, i.e., the calibration set thereof) is run on the flow cytometer, each fluorescence channel of the cytometer may measure (or, i.e., generate data signals corresponding to) a mean fluorescence intensity (MFI) of 500 or more for at least one bead population of the calibration set. In some cases, each fluorescence channel of the flow cytometer may measure an MFI of 1,000 or more, or 2,000 or more, or 5,000 or more, for at least one bead population of the calibration set. In some embodiments, each bead population of the calibration set has the highest fluorescence intensity (e.g., MFI) of the populations of the set for at least one fluorescence channel of the flow cytometer.

In some embodiments, for each light source (e.g., laser) of the flow cytometer, the fluorophores of the calibration set of bead populations emit fluorescence spanning or including the entire fluorescence spectrum-from just above the wavelength(s) emitted by the light source to at or above the wavelengths detectable by the fluorescence channel of the light source configured to detect the longest wavelengths. In some embodiments, for each laser of the flow cytometer, the calibration set of bead populations includes one or more fluorophores having an excitation spectrum including a wavelength of the laser and a combined emission spectrum that spans the full fluorescence spectrum from 20 nm or less longer than the wavelength of the laser (such as, e.g., 10 nm or less, or 5 nm or less, or 2 nm or less) to 810 nm or more (such as, e.g., 850 nm or more, 900 nm or more, 1000 nm or more).

As discussed above, beads surface-stained with fluorophores are able to accurately and effectively account for subtle or minor differences in, e.g., instrument hardware. However, beads surface-stained with fluorophores may have relatively narrow emission spectra when compared with hard dye beads. Consequently, implementing fluorophores for the calibration of flow cytometers having a large number of fluorescence channels (such as, e.g., spectral flow cytometers) using conventional approaches is time-intensive and costly as, e.g., a different fluorophore is used to calibrate each fluorescence channel, or a different set of fluorophore-stained beads is used for each experiment (e.g., depending on the fluorophores of the experiment). In contrast, the control compositions of the present disclosure, effective regardless of the experiments subsequently performed on the flow cytometer and including a number of bead populations (and, e.g., fluorophores thereof) less than or smaller than the number of fluorescence channels of the cytometer, allow fluorophore-stained beads to be used for the calibration of, e.g., spectral flow cytometers, with enhanced efficiency and low cost as compared to traditional flow cytometer calibration techniques.

In some embodiments, the number of bead populations of the calibration set is half the number of fluorescence channels or less such as, e.g., a quarter of the number of fluorescence channels or less, or an eighth of the number of fluorescence channels or less, or a tenth of the number of fluorescence channels or less, or a twentieth of the number of fluorescence channels or less. In some embodiments, the plurality of fluorescence channels includes 10 or more fluorescence channels such as, e.g., 40 or more fluorescence channels, or 60 or more fluorescence channels, or 100 or more fluorescence channels, or 200 or more fluorescence channels. For example, the flow cytometer may include 48 fluorescence channels and the calibration set of bead populations may include 8 populations.

In some embodiments, a bead population of the calibration set includes beads having: a core; a fluorophore; and a linker configured to couple the fluorophore to the core. In some embodiments, the linker is attached to the fluorophore and configured to bind to the core. In other cases, the linker is attached to the core and configured to bind to the fluorophore. In some embodiments, the linker covalently binds the fluorophore to the core. For example, beads may be modified to introduce functional groups, such as carboxyl or amino groups, wherein said functional groups may be used to covalently bind the fluorophore to the core via one or more chemical reactions. In some embodiments, the linker binds the fluorophore to the core via non-covalent bonding. In these instances, the core may include an antigen, and the linker may include an antibody attached to the fluorophore. In some embodiments, the core includes polystyrene. In other embodiments, the core may include a fixed cell.

In some embodiments, the control composition is received by a user with the fluorophores already bound or attached to the cores. In these instances, the bead populations of the calibration set may each have a predetermined fluorophore to core ratio in order to, e.g., ensure the control composition may effectively be used for cross-standardization of different instruments in different laboratories. In some embodiments, the method further includes binding the fluorophores to the cores. In these instances, the method may further include looking up and accounting for the lot number of each reagent used when performing the binding. In some embodiments, the control composition is lyophilized in order to, e.g., extend the shelf life of the composition. In these instances, the method may further include reconstituting the lyophilized composition.

In some embodiments, the fluorophore of a bead population of the calibration set may be a polymeric dye. In some instances of the method, the polymeric dye includes a conjugated polymer. Conjugated polymers (CPs) are characterized by a delocalized electronic structure which includes a backbone of alternating unsaturated bonds (e.g., double and/or triple bonds) and saturated (e.g., single bonds) bonds, where π-electrons can move from one bond to the other. As such, the conjugated backbone may impart an extended linear structure on the polymeric dye, with limited bond angles between repeat units of the polymer. For example, proteins and nucleic acids, although also polymeric, in some cases do not form extended-rod structures but rather fold into higher-order three-dimensional shapes. In addition, CPs may form "rigid-rod" polymer backbones and experience a limited twist (e.g., torsion) angle between monomer repeat units along the polymer backbone chain. In some instances, the polymeric dye includes a CP that has a rigid rod structure. The structural characteristics of the polymeric dyes can have an effect on the fluorescence properties of the molecules. In some embodiments, the polymeric dye of the bead population may be, e.g., BD Horizon Brilliant^{™} Dyes, such as BD Horizon Brilliant^{™} Violet Dyes (e.g., BV421, BV480, BV510, BV570, BV605, BV650, BV711, BV750, BV786); BD Horizon Brilliant^{™} Ultraviolet Dyes (e.g., BUV395, BUV496, BUV563, BUV615, BUV661, BUV737, BUV805); and BD Horizon Brilliant^{™} Blue Dyes (e.g., BB515, BB630-P2, BB660-P2, BB700, BB755-P, BB-790P) (BD Biosciences, San Jose, CA).

In some embodiments, the fluorophore of a bead population of the calibration set may be a non-polymeric dye. For example, the fluorophore of the bead population may be, e.g., 4-acetamido-4'-isothiocyanatostilbene-2,2'disulfonic acid; acridine and derivatives such as acridine, acridine orange, acrindine yellow, acridine red, and acridine isothiocyanate; 5-(2'-aminoethyl)aminonaphthalene-1-sulfonic acid (EDANS); 4-amino-N-[3-vinylsulfonyl)phenyl]naphthalimide-3,5 disulfonate (Lucifer Yellow VS); N-(4-anilino-1-naphthyl)maleimide; anthranilamide; Brilliant Yellow; coumarin and derivatives such as coumarin, 7-amino-4-methylcoumarin (AMC, Coumarin 120), 7-amino-4-trifluoromethylcouluarin (Coumaran 151); cyanine and derivatives such as cyanosine, Cy3, Cy3.5, Cy5, Cy5.5, and Cy7; 4',6-diaminidino-2-phenylindole (DAPI); 5', 5"-dibromopyrogallol-sulfonephthalein (Bromopyrogallol Red); 7-diethylamino-3-(4'-isothiocyanatophenyl)-4-methylcoumarin; diethylaminocoumarin; diethylenetriamine pentaacetate; 4,4'-diisothiocyanatodihydro-stilbene-2,2'-disulfonic acid; 4,4'-diisothiocyanatostilbene-2,2'-disulfonic acid; 5-[dimethylamino]naphthalene-1-sulfonyl chloride (DNS, dansyl chloride); 4-(4'-dimethylaminophenylazo)benzoic acid (DABCYL); 4-dimethylaminophenylazophenyl-4'-isothiocyanate (DABITC); eosin and derivatives such as eosin and eosin isothiocyanate; erythrosin and derivatives such as erythrosin B and erythrosin isothiocyanate; ethidium; fluorescein and derivatives such as 5-carboxyfluorescein (FAM), 5-(4,6-dichlorotriazin-2-yl)aminofluorescein (DTAF), 2'7'-dimethoxy-4'5'-dichloro-6-carboxyfluorescein (JOE), fluorescein isothiocyanate (FITC), fluorescein chlorotriazinyl, naphthofluorescein, and QFITC (XRITC); fluorescamine; IR144; IR1446; Green Fluorescent Protein (GFP); Reef Coral Fluorescent Protein (RCFP); Lissamine^{™}; Lissamine rhodamine, Lucifer yellow; Malachite Green isothiocyanate; 4-methylumbelliferone; ortho cresolphthalein; nitrotyrosine; pararosaniline; Nile Red; Oregon Green; Phenol Red; B-phycoerythrin (PE); o-phthaldialdehyde; pyrene and derivatives such as pyrene, pyrene butyrate and succinimidyl 1-pyrene butyrate; Reactive Red 4 (Cibacron^{™} Brilliant Red 3B-A); rhodamine and derivatives such as 6-carboxy-X-rhodamine (ROX), 6-carboxyrhodamine (R6G), 4,7-dichlororhodamine lissamine, rhodamine B sulfonyl chloride, rhodamine (Rhod), rhodamine B, rhodamine 123, rhodamine X isothiocyanate, sulforhodamine B, sulforhodamine 101, sulfonyl chloride derivative of sulforhodamine 101 (Texas Red), N,N,N',N'-tetramethyl-6-carboxyrhodamine (TAMRA), tetramethyl rhodamine, and tetramethyl rhodamine isothiocyanate (TRITC); riboflavin; rosolic acid and terbium chelate derivatives; xanthene; carotenoid-protein complexes, such as peridinin-chlorophyll proteins (PerCP); allophycocyanin (APC); or combinations thereof.

As described above, embodiments of the methods include measuring data signals generated by the plurality of fluorescence channels of the flow cytometer for the calibration set of bead populations, and calculating a quantitative metric of fluorescence intensity for each of at least a portion of the plurality of fluorescence channels based on the data signal generated for a bead population of the calibration set having the highest fluorescence intensity of the populations of the set for the fluorescence channel. In other words, a quantitative metric of fluorescence intensity is calculated for a fluorescence channel based on the data signal generated for the bead population of the calibration set emitting the highest intensity of light within the range of wavelengths the fluorescence channel is configured to detect when irradiated by the light source corresponding to the fluorescence channel. In some embodiments, the quantitative metric of fluorescence intensity is the mean fluorescence intensity. In these cases, the mean fluorescence intensity calculated for each fluorescence channel may be 500 or more such as, e.g., 1,000 or more, or 2,000 or more, or 5,000 or more. In some embodiments, the mean fluorescence intensity is calculated using an arithmetic mean, a geometric mean, and/or a median. In some embodiments, a quantitative metric of fluorescence intensity is calculated for more than half of the fluorescence channels. In some embodiments, a quantitative metric of fluorescence intensity is calculated for all of the fluorescence channels.

As described above, embodiments of the methods include adjusting one or more fluorescence channels based on the quantitative fluorescence metric calculated for each of the one or more channels. In some embodiments, the one or more fluorescence channels are adjusted such that a subsequent quantitative fluorescence metric calculated for each of the one or more channels is within a predetermined threshold value of a standardized application setting generated for the fluorescence channel and its corresponding highest fluorescence intensity bead population of the calibration set. In some cases, the standardized application settings are MFIs, and the one or more fluorescence channels are adjusted such that a subsequent MFI calculated for each channel from light emitted by their respective highest fluorescence intensity bead population of the calibration set is within a predetermined threshold value of the standardized application setting MFI. In some embodiments, all the fluorescence channels of the flow cytometer are adjusted such that a subsequent quantitative fluorescence metric calculated for each of the channels is within a predetermined threshold value of a standardized application setting generated for the channel.

Adjusting one or more fluorescence channels may include changing any number of parameters of the flow cytometer hardware associated with the one or more fluorescence channels. In some embodiments, adjusting one or more fluorescence channels includes changing a voltage and/or an electronic gain setting of the one or more fluorescence channels. In some embodiments, the adjusting is performed automatically using, e.g., a processor in operative communication with the one or more fluorescence channels.

In some embodiments, the method further includes generating a set of standardized application settings for at least the portion of the plurality of fluorescence channels by calculating a quantitative fluorescence metric for each respective fluorescence channel and its corresponding highest fluorescence intensity bead population of the calibration set. In some cases, a set of standardized application settings is generated for all the fluorescence channels of the flow cytometer. In some embodiments, two or more flow cytometers of the same model may be used to generate the set of standardized application settings. In some instances, the method further includes using the generated set of standardized application settings to compare data generated by different flow cytometers. In some embodiments, the method further includes using the generated set of standardized application settings to reduce variations across different flow cytometers.

In some embodiments, the method further includes determining the fluorophores of the calibration set of bead populations. In these instances, the fluorophores may be determined based on the instrument hardware of a specific flow cytometer model the control composition will be used to calibrate. For example, the calibration set of bead populations may be determined based on the light sources and fluorescence channels of the flow cytometer. In some cases, computer software may be used to determine a potential set of fluorophores for the calibration set of bead populations. For example, BD^{®} Spectrum Viewer or FlowJo^{®} may be used to make a preliminary screening of fluorophores that, together, emit fluorescence across all the fluorescence channels of the flow cytometer. In some embodiments, the potential set of fluorophores having the smallest number of fluorophores, while meeting the limitations of the control compositions of the disclosure (e.g., as described above and herein), is selected to generate the calibration set of bead populations.

In some instances, the sample analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

In practicing the subject methods, an amount of an initial fluidic sample is injected into the flow cytometer. The amount of sample injected into the flow cytometer may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

Methods according to embodiments of the present disclosure include counting and optionally sorting labeled particles (e.g., target cells) in a sample. In practicing the subject methods, the fluidic sample including the particles is first introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In certain embodiments, methods include irradiating a planar cross-section of the flow stream in the sample interrogation region, such as with a laser (as described above). In other embodiments, methods include irradiating a predetermined length of the flow stream in the sample interrogation region, such as corresponding to the irradiation profile of a diffuse laser beam or lamp.

In certain embodiments, methods including irradiating the flow stream at or near the flow cell nozzle orifice. For example, methods may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In certain embodiments, methods include irradiating the flow stream immediately adjacent to the flow cell nozzle orifice.

In embodiments of the method, detectors, such as photomultiplier tubes (PMT), are used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In certain embodiments, the particles are detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

Methods in certain embodiments also include data acquisition, analysis and recording, such as with a computer, wherein multiple data channels record data from each detector for the light scatter and fluorescence emitted by each particle as it passes through the sample interrogation region of the particle sorting module. In these embodiments, analysis includes classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

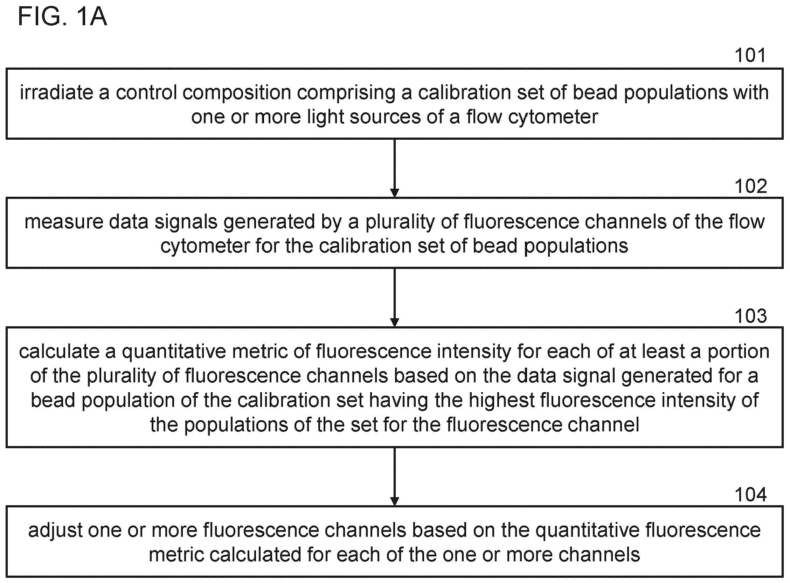

**FIG. 1A** presents a flow diagram for practicing methods of calibrating a flow cytometer according to certain embodiments. In step 101, a control composition of the disclosure (e.g., as described above and herein) is irradiated with one or more light sources of the flow cytometer. In step 102, data signals generated by a plurality of fluorescence channels of the flow cytometer for the calibration set of bead populations are measured. In step 103, a quantitative metric of fluorescence intensity is calculated for each of at least a portion of the plurality of fluorescence channels based on the data signal generated for a bead population of the calibration set having the highest fluorescence intensity of the populations of the set for the fluorescence channel. In step 104, one or more fluorescence channels are adjusted based on the quantitative fluorescence metric calculated for each of the one or more channels.

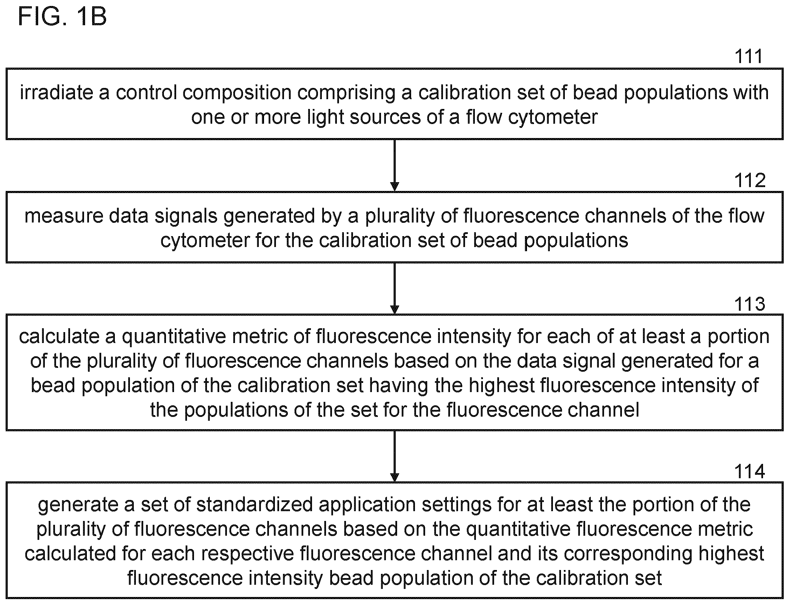

**FIG. 1B** presents a flow diagram for practicing methods of generating a set of standardized application settings used to calibrate a flow cytometer according to certain embodiments. In step 111, a control composition of the disclosure (e.g., as described above and herein) is irradiated with one or more light sources of the flow cytometer. In step 112, data signals generated by a plurality of fluorescence channels of the flow cytometer for the calibration set of bead populations are measured. In step 113, a quantitative metric of fluorescence intensity is calculated for each of at least a portion of the plurality of fluorescence channels based on the data signal generated for a bead population of the calibration set having the highest fluorescence intensity of the populations of the set for the fluorescence channel. In step 114, a set of standardized application settings is generated for at least the portion of the plurality of fluorescence channels by calculating a quantitative fluorescence metric for each respective fluorescence channel and its corresponding highest fluorescence intensity bead population of the calibration set.

### FLOW CYTOMETER DEVICES AND SYSTEMS

Aspects of the present disclosure further include flow cytometers and flow cytometer systems, including computer-controlled systems, for practicing embodiments of the above methods. Aspects of the flow cytometers and cytometer systems include: one or more light sources configured to irradiate beads in a flow stream of the flow cytometer; a plurality of fluorescence channels configured to generate data signals from light received from the irradiated beads; and a processor including memory operably coupled to the processor wherein the memory includes instructions stored thereon, which when executed by the processor, cause the processor to: measure data signals generated by the plurality of fluorescence channels for a control composition including a calibration set of bead populations, wherein each bead population of the calibration set includes a different fluorophore attached to a surface thereof and the calibration set includes a number of bead populations smaller than the number of fluorescence channels; calculate a quantitative metric of fluorescence intensity for each of at least a portion of the plurality of fluorescence channels based on the data signal generated for a bead population of the calibration set having the highest fluorescence intensity of the populations of the set for the fluorescence channel; and adjust one or more fluorescence channels based on the quantitative fluorescence metric calculated for each of the one or more channels.

Embodiments of the subject flow cytometers and flow cytometer systems include a flow cytometer comprising the one or more light sources and the plurality of fluorescence channels, as described above and herein. In some embodiments, the processor is completely integrated with the flow cytometer (i.e., wherein the flow cytometer includes the one or more light sources, the plurality of fluorescence channels, and the processor, as described above and herein). In other embodiments, the processor may be external to the flow cytometer. In these instances, the processor is configured to receive data signals from the plurality of fluorescence channels and to adjust the one or more fluorescence channels through, e.g., communication with the flow cytometer.

In some embodiments, the processor may be a collection of processors which may or may not operate in parallel. In these instances, some of the processors may be integrated with the flow cytometer, while others are operatively coupled with, but external to, the flow cytometer. For example, the processor may include a first processor integrated with the flow cytometer and a second processor external to the flow cytometer operatively coupled with the first processor, wherein the first processor performs the measuring, the second processor performs the calculating, and the first processor performs the adjusting (e.g., based on adjustments determined by the second processor). In this regard, the terms "flow cytometer" and "flow cytometer system" may be used interchangeably herein, wherein aspects of the subject flow cytometer systems may be directly integrated into the subject flow cytometers, and aspects of the subject flow cytometers may be included in the subject flow cytometer systems external to the flow cytometer of the system based, e.g., on the needs and preferences of a user. For example, said integration or externalization may occur based on, e.g., processing or computing power constraints, the desire to incorporate user feedback, compatibility with previously existing instruments, labor constraints, etc.

In some embodiments, the one or more fluorescence channels are adjusted such that a subsequent quantitative fluorescence metric calculated for each of the one or more channels is within a predetermined threshold value of a standardized application setting generated for the fluorescence channel and its corresponding highest fluorescence intensity bead population of the calibration set. In some embodiments, the adjusting includes changing a voltage and/or an electronic gain setting of one or more fluorescence channels. In some embodiments, the quantitative metric of fluorescence intensity is the mean fluorescence intensity (MFI). In some embodiments, the flow cytometer is a spectral flow cytometer.

In some embodiments, the processor includes instructions stored thereon, which when executed by the processor, cause the processor to generate a set of standardized application settings for at least the portion of the plurality of fluorescence channels by calculating a quantitative fluorescence metric for each respective fluorescence channel and its corresponding highest fluorescence intensity bead population of the calibration set. In some embodiments, the processor includes instructions stored thereon, which when executed by the processor, cause the processor to use a generated set of standardized application settings to compare data generated by different flow cytometers. In some embodiments, the processor includes instructions stored thereon, which when executed by the processor, cause the processor to use a generated set of standardized application settings to reduce variations across different flow cytometers.

In some embodiments, the processor may be configured to automatically perform the above-described flow cytometer calibration methods. In some instances the flow cytometer system further includes one or more computers for complete automation or partial automation of the methods described herein. In some embodiments, systems include a computer having a computer readable storage medium with a computer program stored thereon.

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. In some embodiments, the processor includes analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

In some embodiments, a computer program product is described comprising a computer usable medium having control logic (computer software program, including program code) stored therein. The control logic, when executed by the processor the computer, causes the processor to perform functions described herein. In other embodiments, some functions are implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

In some embodiments, systems according to the present disclosure may be configured to include a communication interface. In some embodiments, the communication interface includes a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

In one embodiment, the communication interface is configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

In one embodiment, the communication interface is configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

In one embodiment, the communication interface is configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

In one embodiment, the subject systems are configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. In some embodiments, the server device has a display, such as a liquid crystal display (LCD), as well as an input device, such as buttons, a keyboard, mouse or touch-screen.

In some embodiments, the communication interface is configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished in alternative embodiments using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

In some embodiments, the subject flow cytometers of the disclosure include a flow cell. Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. In certain instances, the flow cell includes a light-accessible flow channel. The cuvette may be comprised of, e.g., quartz, glass, clear plastic, and the like. In some embodiments, cuvettes are formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 µm represents the optical axis of light emitted by the light source, the interrogation point may range from -50 µm to 50 µm, such as -25 µm to 40 µm, and including -15 µm to 30 µm. Depending on certain considerations (e.g., the number and arrangement of lasers), multiple irradiation points may exist within the flow cells.

In some embodiments, the flow cell includes, or is configured for use with, a sample injection port configured to provide a sample to the flow cell. In embodiments, the sample injection system is configured to provide suitable flow of sample to the flow cell inner chamber (i.e., flow channel). Depending on the desired characteristics of the flow stream, the rate of sample conveyed to the flow cell chamber by the sample injection port may be1 µL/min or more, such as 2 µL/min or more, such as 3 µL/min or more, such as 5 µL/min or more, such as 10 µL/min or more, such as 15 µL/min or more, such as 25 µL/min or more, such as 50 µL/min or more and including 100 µL/min or more, where in some instances the rate of sample conveyed to the flow cell chamber by the sample injection port is 1µL/sec or more, such as 2 µL/sec or more, such as 3 µL/sec or more, such as 5 µL/sec or more, such as 10 µL/sec or more, such as 15 µL/sec or more, such as 25 µL/sec or more, such as 50 µL/sec or more and including 100 µL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In certain embodiments, the sample injection port has a circular orifice. The size of the sample injection port orifice may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

In certain instances, the sample injection port is a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, in certain instances, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

In some embodiments, the flow cell also includes a sheath fluid injection port configured to provide a sheath fluid to the flow cell. In embodiments, the sheath fluid injection system is configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more.

In some embodiments, the sheath fluid injection port is an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, in certain instances, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

As discussed above, flow cytometers of the present disclosure include a light source configured to irradiate the particles in the flow stream at an interrogation point within the flow cell. The number of light sources in the flow cytometers may vary. In some embodiments, flow cytometers include a single light source. Alternatively, flow cytometers may in some instances include a plurality of light sources. In some such instances, the number of light sources ranges from 2 to 10, such as 2 to 5, and including 2 to 4. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In certain embodiments, flow cytometers of interest include one or more focusing lenses. The focusing lens, in one example, may be a de-magnifying lens. In still other embodiments, flow cytometers of interest include fiber optics.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser and a 635 nm laser.

In certain embodiments, the light source is a light beam generator that is configured to generate two or more beams of frequency shifted light. In some instances, the light beam generator includes a laser, a radiofrequency generator configured to apply radiofrequency drive signals to an acousto-optic device to generate two or more angularly deflected laser beams. In these embodiments, the laser may be a pulsed lasers or continuous wave laser. For example, lasers in light beam generators of interest include those listed above.

The acousto-optic device may be any convenient acousto-optic protocol configured to frequency shift laser light using applied acoustic waves. In certain embodiments, the acousto-optic device is an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

In embodiments, a controller is configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

In some instances, to produce an intensity profile of the angularly deflected laser beams in the output laser beam, the controller is configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal has, in some embodiments, a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In certain embodiments, the controller has a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. In other embodiments, the memory may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In certain embodiments, the controller has a processor having memory operably coupled to the processor such that the memory includes instructions stored thereon, which when executed by the processor, cause the processor to produce an output laser beam having increasing intensity from the edges to the center of the output laser beam along the horizontal axis. In these instances, the intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. In other embodiments, the controller has a processor having memory operably coupled to the processor such that the memory includes instructions stored thereon, which when executed by the processor, cause the processor to produce an output laser beam having an increasing intensity from the edges to the center of the output laser beam along the horizontal axis. In these instances, the intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. In yet other embodiments, the controller has a processor having memory operably coupled to the processor such that the memory includes instructions stored thereon, which when executed by the processor, cause the processor to produce an output laser beam having an intensity profile with a Gaussian distribution along the horizontal axis. In still other embodiments, the controller has a processor having memory operably coupled to the processor such that the memory includes instructions stored thereon, which when executed by the processor, cause the processor to produce an output laser beam having a top hat intensity profile along the horizontal axis.

In embodiments, light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. In some embodiments, systems are configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

In certain instances, light beam generators configured to generate two or more beams of frequency shifted light include laser excitation modules as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

As discussed above, flow cytometers include a detector configured to collect light emitted by the irradiated particles. The light detectors are configured to detect particle-modulated light conveyed by the fiber optic light collection elements and generate signals based on a characteristic of that light (e.g., intensity). For example, the one or more particle-modulated light detector(s) may include one or more side-scattered light detectors for detecting side-scatter wavelengths of light (i.e., light refracted and reflected from the surfaces and internal structures of the particle). In some embodiments, flow cytometers include a single side-scattered light detector. In other embodiments, flow cytometers include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

As discussed above, the subject flow cytometers may include a fluorescent light detector or fluorescence channel configured to detect one or more fluorescent wavelengths of light. In other embodiments, flow cytometers include multiple fluorescent light detectors (i.e., fluorescence channels) such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject flow cytometers include multiple fluorescent light detectors, each fluorescent light detector may be the same, or the collection of fluorescent light detectors may be a combination of different types of detectors. For example, where the subject flow cytometers include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

In some embodiments, fluorescent light detectors (i.e., fluorescence channels) of interest are configured to measure collected light over a range of wavelengths (e.g., 200 nm-1000 nm). In certain embodiments, detectors of interest are configured to collect spectra of light over a range of wavelengths. For example, flow cytometers may include one or more detectors configured to collect spectra of light over one or more of the wavelength ranges of 200 nm-1000 nm. In yet other embodiments, detectors of interest are configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838, the disclosure of which is incorporated by reference herein in its entirety.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter, BD Biosciences FACSDiscover^{™} cell sorter, or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766.

In some embodiments, the flow cytometer is configured as an imaging flow cytometer. For example, in certain instances, the subject systems are flow cytometry systems configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851. In some embodiments where the flow cytometer is a particle sorter, the particle sorter is an image enabled particle sorter. Image enabled particle sorters are described in U.S. Patent Nos. 10,324,019; 10,620,111; 11,105,728; and 11,774,343; as well as U.S. Patent Application Nos. 18/537,103; 18/657,618; 18,657,623 and 18/657,633.

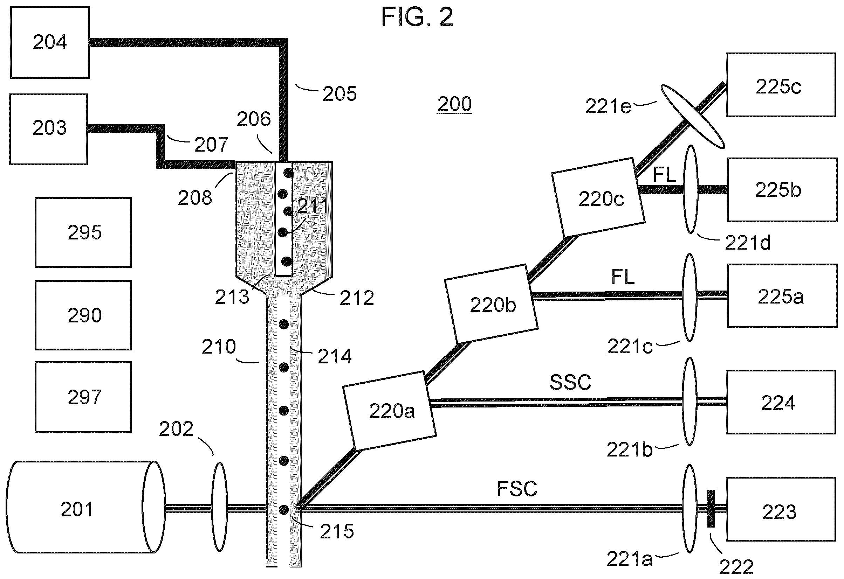

**FIG. 2** shows a system 200 for flow cytometry in accordance with an illustrative embodiment of the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2****,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2****,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with an embodiment of the present disclosure is not limited to the flow cytometer depicted in **FIG. 2****,** but can include any flow cytometer known in the art. For example, a flow cytometer may have any number of lasers, beam splitters, filters, and detectors at various wavelengths and in various different configurations. For example, while the embodiment of **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. In such an embodiment, a display may also form part of the I/O capabilities 297 for presenting experimental data to users of the cytometer 200. Alternatively, some or all of the memory 295 and controller/processor 290 and I/O capabilities may be part of one or more external devices such as a general purpose computer. In some embodiments, some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017. In certain embodiments, particles (e.g., cells) of the sample are sorted using a sort decision module having a plurality of sort decision units, such as those described in U.S. Patent Publication No. 2020/0256781, filed on December 23, 2019. In some embodiments, systems for sorting components of a sample include a particle sorting module having deflection plates, such as described in U.S. Patent Publication No. 2017/0299493, filed on March 28, 2017.

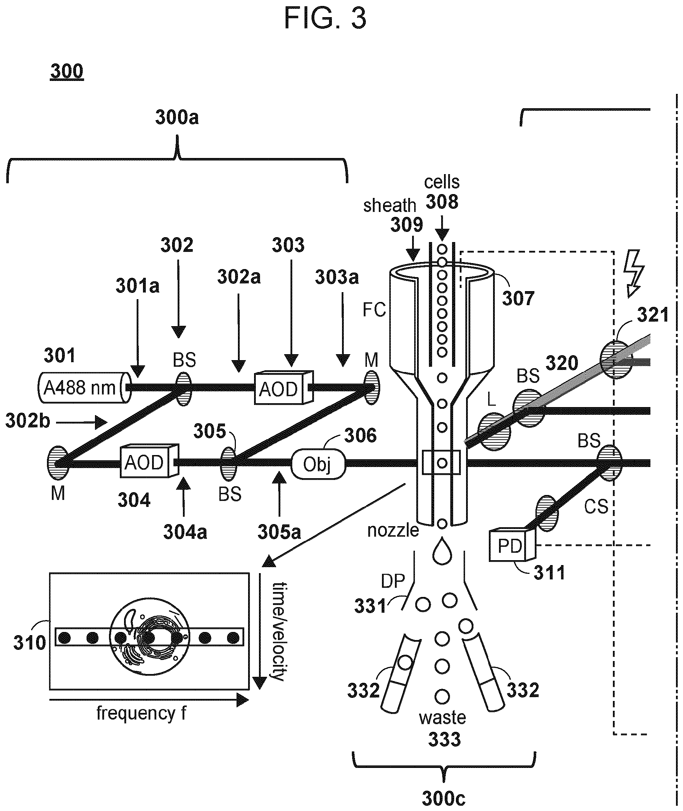

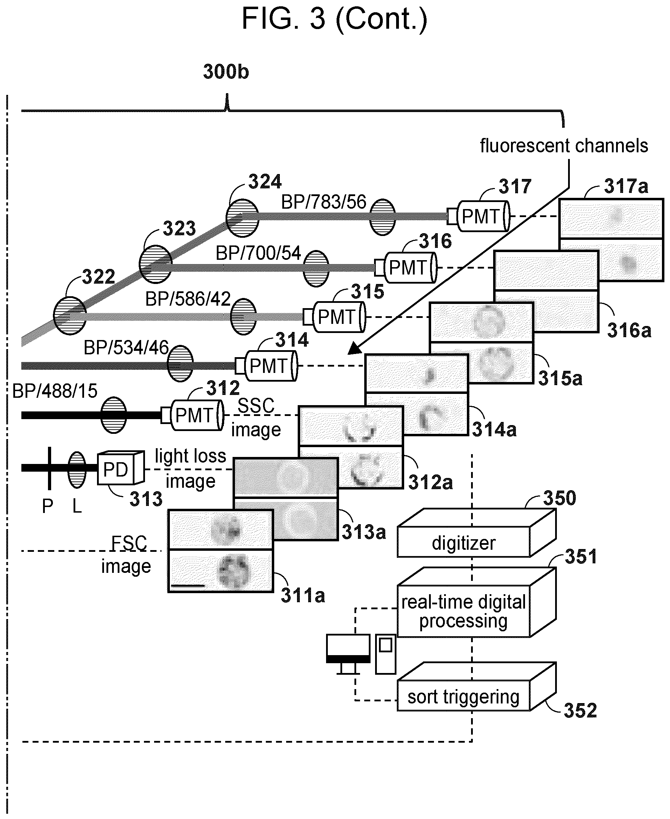

In certain embodiments, systems are a fluorescence imaging using radiofrequency tagged emission image-enabled particle sorter, such as depicted in **FIG. 3****.** Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. In some instances, output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. In some instances, output beam 304a generated from acousto-optic device 304 includes a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In certain embodiments, acousto-optic device 303 (AOD) splits a single laser beam into an array of beamlets, each having different optical frequency and angle. Second AOD 304 tunes the optical frequency of a reference beam, which is then overlapped with the array of beamlets at beam combiner 305. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. In some embodiments, forward scatter detector 311 and side scatter detector 312 are photodiodes (e.g., avalanche photodiodes, APDs). In some instances, brightfield photodetector 313 is a photomultiplier tube (PMT). Fluorescence from the irradiated sample is also detected with fluorescence photodetectors 314-317. In some instances, photodetectors 314-317 are photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. In some instances, optical component 321 is a 534 nm/40 nm bandpass. In some instances, optical component 322 is a 586 nm/42 nm bandpass. In some instances, optical component 323 is a 700 nm/54 nm bandpass. In some instances, optical component 324 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. In some instances, sort component 300c is configured to sort particles with an enclosed particle sorting module, such as those described in U.S. Patent Publication No. 2017/0299493, filed on March 28, 2017. In certain embodiments, sorting component 300c includes a sort decision module having a plurality of sort decision units, such as those described in U.S. Patent Publication No. 2020/0256781.

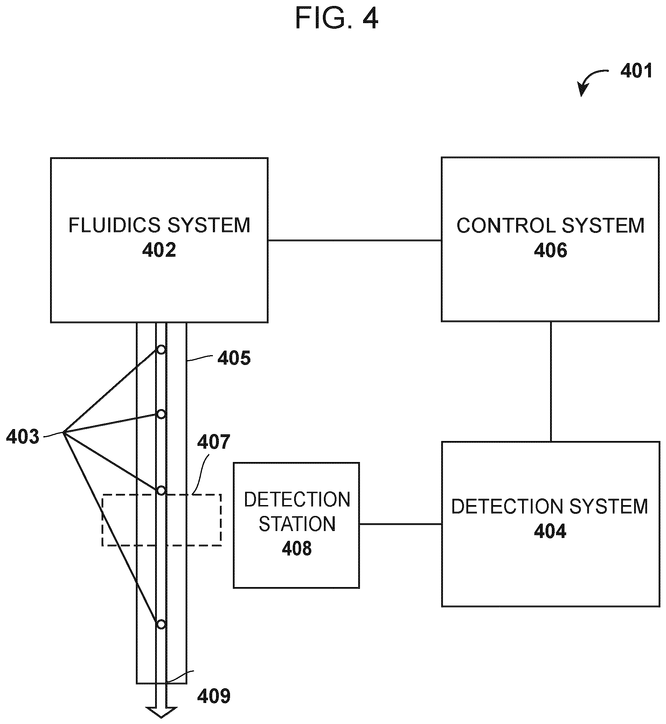

In some embodiments, systems are particle analyzers where the particle analysis system 401 (**FIG. 4**) can be used to analyze and characterize particles, with or without physically sorting the particles into collection vessels. **FIG. 4** shows a functional block diagram of a particle analysis system for computational based sample analysis and particle characterization. In some embodiments, the particle analysis system 401 is a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4****,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

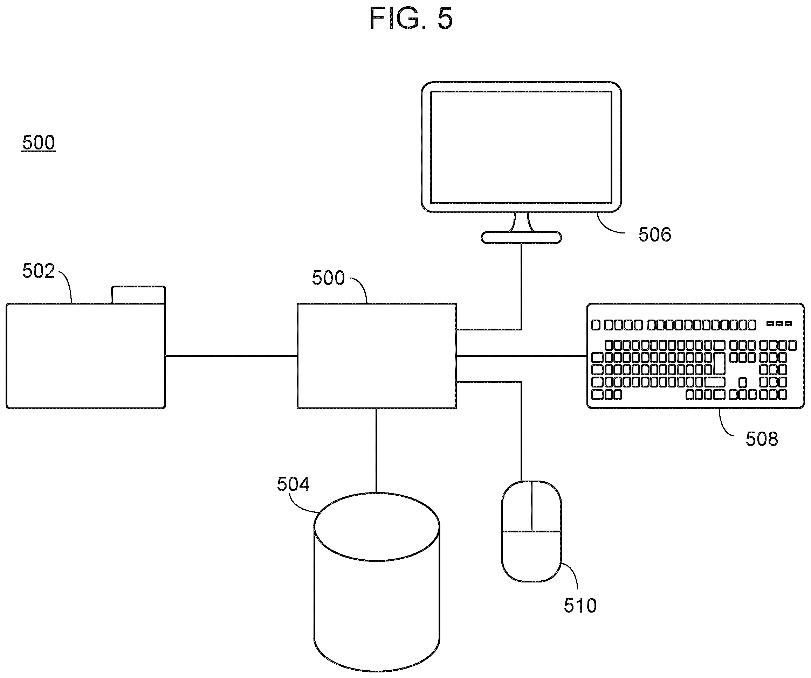

**FIG. 5** shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown in **FIG. 5****,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

In some embodiments, the analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

In some implementations, the analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

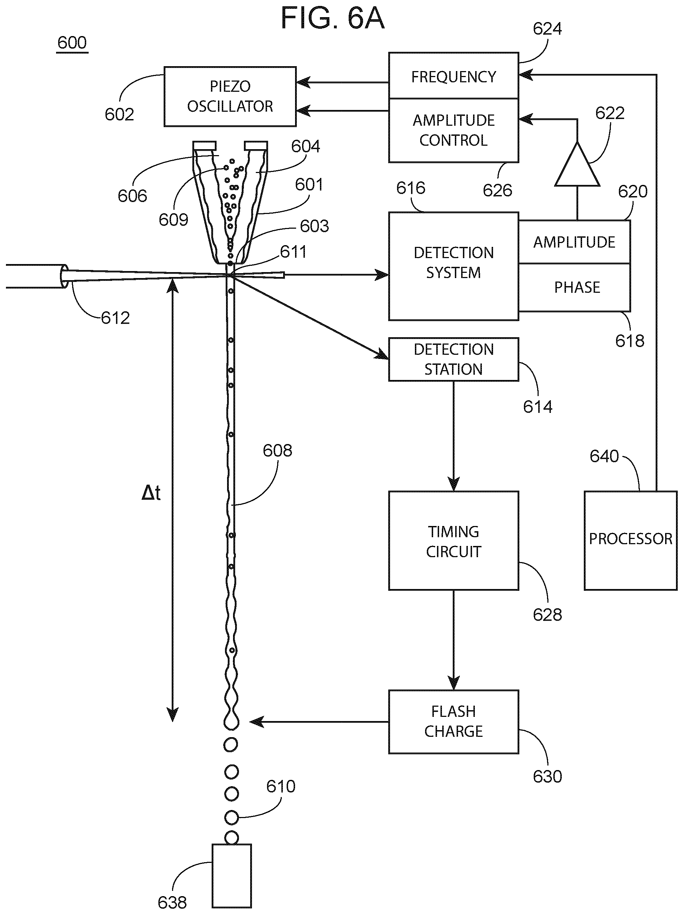

**FIG. 6A** is a schematic drawing of a particle sorter system 600 (e.g., the particle analyzer or sorting system 502) in accordance with one embodiment presented herein. In some embodiments, the particle sorter system 600 is a cell sorter system. As shown in **FIG. 6A****,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 6A****,** the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

In some implementations, sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

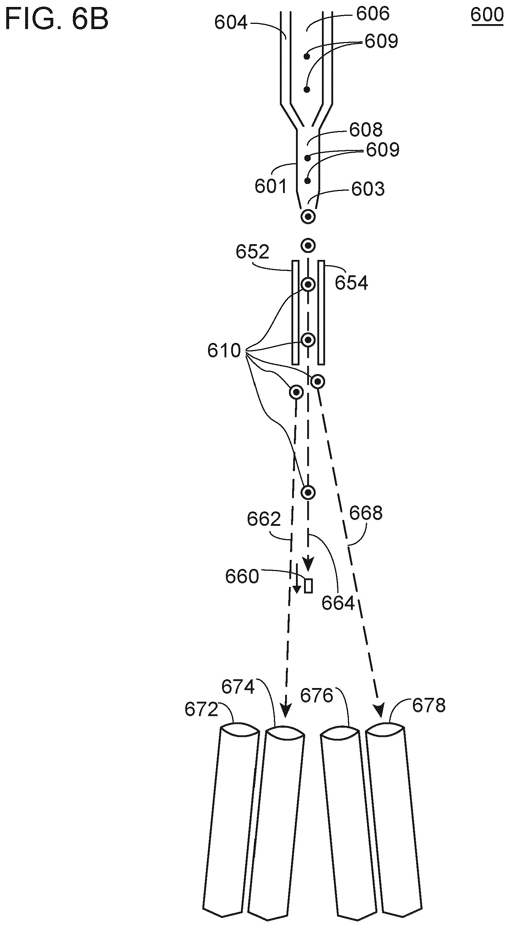

**FIG. 6B** is a schematic drawing of a particle sorter system, in accordance with one embodiment presented herein. The particle sorter system 600 shown in **FIG. 6B****,** includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in **FIG. 6B****,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. Example implementations of the embodiment shown in **FIG. 6B** include the BD FACSAria^{™} line of flow cytometers commercially provided by Becton, Dickinson and Company (Franklin Lakes, NJ).

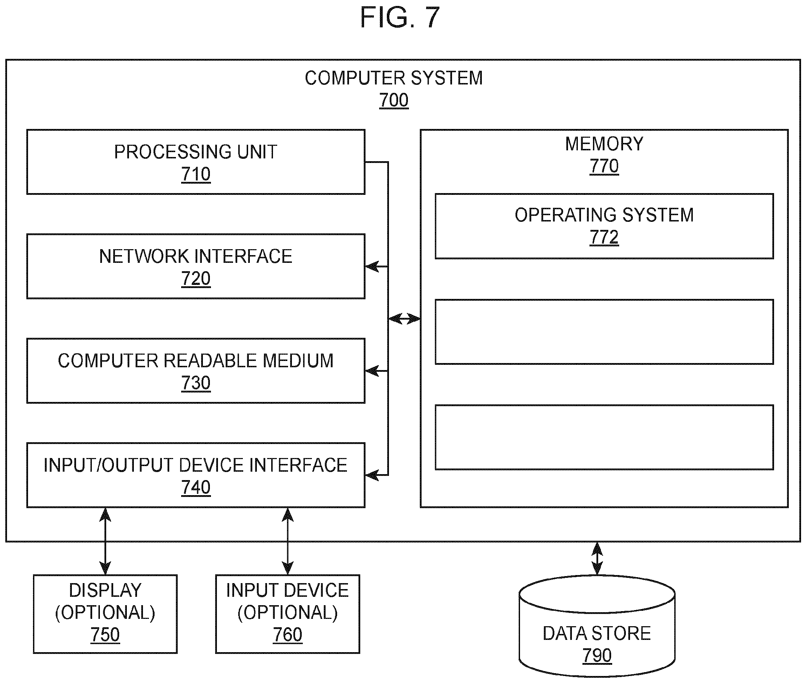

**FIG. 7** depicts a general architecture of an example computing device 700 according to certain embodiments. The general architecture of the computing device 700 depicted in **FIG. 7** includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo^{®}) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components in some embodiments) that the processing unit 710 executes in order to implement one or more embodiments. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

### NON-TRANSITORY COMPUTER-READABLE STORAGE MEDIA

Aspects of the present disclosure further include non-transitory computer readable storage media having instructions for practicing the subject methods. Computer readable storage mediums may be employed on one or more computers for complete automation or partial automation of a system for practicing methods described herein. In certain embodiments, instructions in accordance with the method described herein can be coded onto a computer-readable medium in the form of "programming", where the term "computer readable medium" as used herein refers to any non-transitory storage medium that participates in providing instructions and data to a computer for execution and processing. Examples of suitable non-transitory storage media include a floppy disk, hard disk, optical disk, magneto-optical disk, CD-ROM, CD-R, magnetic tape, non-volatile memory card, ROM, DVD-ROM, Blue-ray disk, solid state disk, flash drive, and network attached storage (NAS), whether or not such devices are internal or external to the computer. A file containing information can be "stored" on computer readable medium, where "storing" means recording information such that it is accessible and retrievable at a later date by a computer. The computer-implemented method described herein can be executed using programming that can be written in one or more of any number of computer programming languages. Such languages include, for example, Java, Python, Visual Basic, and C++, as well as many others.

In some embodiments, computer readable storage media of interest include a computer program stored thereon, where the computer program when loaded on the computer includes instructions for (e.g., automatically) calibrating a flow cytometer by: irradiating a control composition including a calibration set of bead populations with one or more light sources of the flow cytometer, wherein each bead population of the calibration set includes a different fluorophore attached to a surface thereof and the calibration set includes a number of bead populations smaller than the number of fluorescence channels of the flow cytometer; measuring data signals generated by the plurality of fluorescence channels of the flow cytometer for the calibration set of bead populations; calculating a quantitative metric of fluorescence intensity for each of at least a portion of the plurality of fluorescence channels based on the data signal generated for a bead population of the calibration set having the highest fluorescence intensity of the populations of the set for the fluorescence channel; and adjusting one or more fluorescence channels based on the quantitative fluorescence metric calculated for each of the one or more channels, e.g., as described above and herein.

### KITS

Aspects of the present disclosure further include kits, where kits include storage media such as a magneto-optical disk, CD-ROM, CD-R, magnetic tape, non-volatile memory card, ROM, DVD-ROM, Blue-ray disk, solid state disk, and network attached storage (NAS). Any of these program storage media, or others now in use or that may later be developed, may be included in the subject kits. In some embodiments, the program storage media include instructions for calibrating a flow cytometer, e.g., as described above and herein. In some embodiments, the program storage media include instructions for generating a set of standardized application settings for the fluorescence channels of a flow cytometer, e.g., as described above and herein. In some embodiments, the instructions contained on computer readable media provided in the subject kits, or a portion thereof, can be implemented as software components of a software for analyzing data. In these embodiments, computer-controlled systems according to the instant disclosure may function as a software "plugin" for an existing software package (e.g., FlowJo^{®}).

In some embodiments, the subject kits may include, e.g., a control composition including a calibration set of bead populations as described above and herein. In some cases, the calibration set of bead populations includes 12 populations or less such as, e.g., 10 populations or less, or 6 populations or less, or 4 populations or less. In some embodiments a bead population of the calibration set includes beads having: a core; a fluorophore; and a linker attached to the fluorophore and configured to bind to the core. In some embodiments, the linker is bound to the core such that, e.g., the fluorophore is covalently bound to the core via the linker. In some cases, the core includes an antigen, and the linker includes an antibody. In some embodiments, the core includes polystyrene. In some embodiments, the control composition is positioned in a liquid medium including, e.g., a solvent, a buffer, and/or a stabilizer. In some embodiments, the control composition is lyophilized. In some embodiments, the control composition is stored in a liquid container such as, e.g., a tube or a vial. In these instances, the liquid container may be sealed. In some embodiments, the subject kits may include the control composition and the program storage media including instructions, e.g., as described above and herein.

In addition to the above components, the subject kits may further include (in some embodiments) instructions. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The methods and systems find use in a variety of applications where it is desirable to analyze and, optionally, sort particle components in a sample in a fluid medium, such as a biological sample, and then store sorted products, e.g., for later use, such as therapeutic use. The present disclosure particularly finds use where it is desirable to calibrate a flow cytometer including a plurality of fluorescence channels by, e.g., adjusting a voltage and/or an electronic gain setting of one or more of the fluorescence channels.

The subject methods and systems further find use in applications where it is desirable to reduce variations across different flow cytometers and/or compare data generated by different flow cytometers (or, e.g., the same flow cytometer at different times). Embodiments of the disclosure also find use where it is desirable to provide a flow cytometer with improved cell sorting accuracy, enhanced particle collection, enhanced performance, and reduced set-up times.

Embodiments of the disclosure find use in applications where cells prepared from a biological sample may be desired for research, laboratory testing or for use in therapy. In some embodiments, the subject methods and devices may facilitate obtaining and/ or analyzing individual cells prepared from a target fluidic or tissue biological sample. For example, the subject methods and systems facilitate obtaining cells from fluidic or tissue samples to be used as a research or diagnostic specimen for diseases such as cancer. Likewise, the subject methods and systems may facilitate obtaining cells from fluidic or tissue samples to be used in therapy.

The following is presented by way of example and not by way of limitation:

### EXPERIMENTAL

The following examples are put forth so as to provide those of ordinary skill in the art with a complete disclosure and description of how to make and use the present invention, and are not intended to limit the scope of what the inventors regard as their invention nor are they intended to represent that the experiments below are all or the only experiments performed. Efforts have been made to ensure accuracy with respect to numbers used (e.g., mean fluorescence intensity (MFI), wavelength, etc.) but some experimental errors and deviations should be accounted for.

### EXPERIMENT 1

### Generating Control Compositions

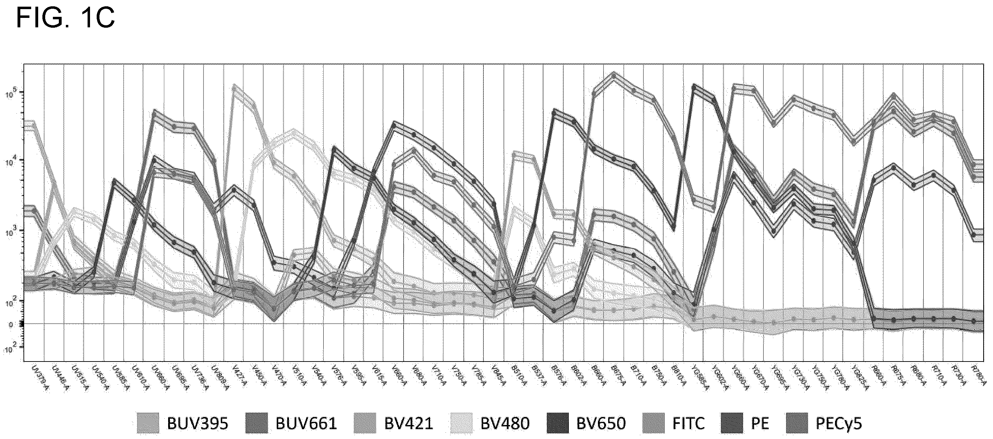

An initial screening was performed to find a combination of fluorochromes that, together, would provide an emission signal in all the photomultiplier tubes (PMT) of the FACS Symphony A5 SE spectral instrument using the Spectral Populations plugin in FlowJo^{®} (v1 0.1 0.0). From the screening, it was determined that the use of a limited number of unique fluorochromes, spanning the full spectrum of 375-810 nm across all laser lines of the spectral instrument, enabled the detection of a signal sufficient for spectral cytometry cross-instrument standardization across all detectors of the spectral instrument. One example of a fluorochrome combination sufficient for spectral cytometry cross-instrument standardization of the FACS Symphony A5 SE spectral instrument was selected for further analysis. The selected combination includes BUV395, BUV661, BV421, BV480, BV650, FITC, PE, and PE-Cy5 (see, e.g., FIG. 1C). Once the combination of fluorochromes was selected, BD CompBeads were stained with antibodies against human CD4 conjugated to the selected fluorophores.

### Generating Standardized Application Settings

Individually stained BD CompBeads were run on two different FACS Symphony A5 SE spectral instruments set up with the same application settings (3*r-SD), and the MFI of each fluorophore in each PMT was recorded. The average MFI of each detector in both instruments was calculated for each fluorophore in order to set target MFIs to create standardized application settings. The fluorophore providing the highest signal in each channel was identified and the MFI of said fluorophore was assigned as the cross-instrument fluorophore for setting the corresponding channel on the instruments. Fluorophores with a minimum MFI value of 1000 were determined to be sufficient for cross instrument standardization.

To create standardized application settings, a tube of each single-color stained bead was run and PMT voltages were adjusted until reaching the target MFI in each detector. The single-color stained beads were then run again, and the obtained MFIs were compared to the target MFIs (see, e.g., Table 1).

**Table 1: Standardized Application Settings for FACS Symphony A5 SE Instruments**

| **Fluor** | **Channel** | **Target MFI** | **Final MFI** | **Average** | **Difference** | **SD** | **%CV** |
|---|---|---|---|---|---|---|---|
| BUV395 | UV379 | 35919 | 35507 | 35713 | 412 | 291 | 1% |
| | UV446 | 4935 | 4955 | 4945 | -20 | 14 | 0% |
| BUV661 | UV660 | 36024 | 35421 | 35722 | 603 | 426 | 1% |
| | UV695 | 28451 | 27673 | 28062 | 778 | 550 | 2% |
| | UV736 | 23668 | 23261 | 23465 | 407 | 288 | 1% |
| | UV809 | 7843 | 7680 | 7762 | 163 | 115 | 1% |
| BV421 | V427 | 102757 | 102829 | 102793 | -72 | 51 | 0% |
| | V450 | 64442 | 65716 | 65079 | -1274 | 901 | 1% |
| BV480 | UV515 | 1636 | 1674 | 1655 | -39 | 27 | 2% |
| | UV540 | 1070 | 1061 | 1066 | 9 | 6 | 1% |
| | V470 | 14162 | 14250 | 14206 | -89 | 63 | 0% |
| | V510 | 19400 | 19438 | 19419 | -38 | 27 | 0% |
| | V540 | 10946 | 11070 | 11008 | -124 | 88 | 1% |
| BV650 | V615 | 6793 | 6674 | 6734 | 119 | 84 | 1% |
| | V660 | 30522 | 30232 | 30377 | 290 | 205 | 1% |
| | V680 | 23425 | 23371 | 23398 | 54 | 38 | 0% |
| | V710 | 18516 | 18286 | 18401 | 230 | 163 | 0.9% |
| | V750 | 9482 | 9343 | 9413 | 139 | 98 | 1.0% |
| | V785 | 5252 | 5180 | 5216 | 72 | 51 | 1.0% |
| | V845 | 1876 | 1899 | 1888 | -23 | 16 | 0.9% |
| FITC | B510 | 11281 | 11146 | 11214 | 135 | 95 | 0.9% |
| | B537 | 12175 | 11827 | 12001 | 348 | 246 | 2.1% |
| PE | UV585 | 4629 | 4509 | 4569 | 120 | 85 | 1.9% |
| | UV610 | 2233 | 2206 | 2219 | 27 | 19 | 0.8% |
| | V576 | 7016 | 6911 | 6964 | 105 | 74 | 1.1% |
| | V595 | 8299 | 8171 | 8235 | 128 | 90 | 1.1% |
| | B576 | 36517 | 36110 | 36314 | 407 | 288 | 0.8% |
| | B602 | 31396 | 31338 | 31367 | 58 | 41 | 0.1% |
| | YG585 | 101122 | 100337 | 100730 | 785 | 555 | 0.6% |
| | YG602 | 75727 | 74793 | 75260 | 934 | 660 | 0.9% |
| PECy5 | B660 | 140108 | 135404 | 137756 | 4704 | 3326 | 2.4% |
| | B675 | 168221 | 162866 | 165543 | 5355 | 3786 | 2.3% |
| | B710 | 116700 | 114278 | 115489 | 2422 | 1713 | 1.5% |
| | B750 | 97423 | 94603 | 96013 | 2820 | 1994 | 2.1% |
| | B810 | 25592 | 24801 | 25196 | 791 | 559 | 2.2% |
| | YG660 | 156606 | 151264 | 153935 | 5342 | 3777 | 2.5% |
| | YG670 | 120265 | 116546 | 118406 | 3719 | 2630 | 2.2% |
| | YG695 | 40529 | 39478 | 40004 | 1051 | 743 | 1.9% |
| | YG730 | 103776 | 100831 | 102304 | 2945 | 2082 | 2.0% |
| | YG750 | 88557 | 85562 | 87059 | 2995 | 2117 | 2.4% |
| | YG780 | 72654 | 69678 | 71166 | 2976 | 2104 | 3.0% |
| | YG825 | 26569 | 25580 | 26074 | 989 | 699 | 2.7% |
| | R660 | 36051 | 34914 | 35482 | 1137 | 804 | 2.3% |
| | R675 | 91593 | 88764 | 90179 | 2829 | 2000 | 2.2% |
| | R680 | 59391 | 58179 | 58785 | 1212 | 857 | 1.5% |
| | R710 | 62350 | 61082 | 61716 | 1268 | 896 | 1.5% |
| | R730 | 50307 | 50286 | 50296 | 21 | 14 | 0.0% |
| | R780 | 10899 | 10602 | 10751 | 297 | 210 | 2.0% |

Notwithstanding the appended claims, the disclosure is also defined by the following clauses:
1. A method of calibrating a flow cytometer comprising a plurality of fluorescence channels, the method comprising:
   (a) irradiating a control composition comprising a calibration set of bead populations with one or more light sources of the flow cytometer,
      wherein each bead population of the calibration set comprises a different fluorophore attached to a surface thereof and the calibration set comprises a number of bead populations that is less than the number of fluorescence channels of the flow cytometer;
   (b) measuring data signals generated by the plurality of fluorescence channels of the flow cytometer for the calibration set of bead populations;
   (c) calculating a quantitative metric of fluorescence intensity for each of at least a portion of the plurality of fluorescence channels based on the data signal generated for a bead population of the calibration set having the highest fluorescence intensity of the populations of the set for the fluorescence channel; and
   (d) adjusting one or more fluorescence channels based on the quantitative fluorescence metric calculated for each of the one or more channels.
2. The method according to clause 1, wherein the one or more fluorescence channels are adjusted such that a subsequent quantitative fluorescence metric calculated for each of the one or more channels is within a predetermined threshold value of a standardized application setting generated for the fluorescence channel and its corresponding highest fluorescence intensity bead population of the calibration set.
3. The method according to clause 1 or 2, wherein the adjusting comprises changing a voltage and/or an electronic gain setting of one or more fluorescence channels.
4. The method according to any one of clauses 1 to 3, wherein each bead population of the calibration set has the highest fluorescence intensity of the populations of the set for at least one fluorescence channel of the flow cytometer.
5. The method according to any one of clauses 1 to 4, wherein the quantitative metric of fluorescence intensity is the mean fluorescence intensity (MFI).
6. The method according to clause 5, wherein the MFI calculated for each fluorescence channel is 1,000 or more.
7. The method according to any one of clauses 1 to 6, wherein the flow cytometer is a spectral flow cytometer.
8. The method according to any one of the preceding clauses, wherein the number of bead populations of the calibration set is half the number of fluorescence channels or less.
9. The method according to clause 8, wherein the number of bead populations of the calibration set is a quarter of the number of fluorescence channels or less.
10. The method according to clause 9, wherein the number of bead populations of the calibration set is an eighth of the number of fluorescence channels or less.
11. The method according to any one of the preceding clauses, wherein the plurality of fluorescence channels comprises 10 or more fluorescence channels.
12. The method according to clause 11, wherein the plurality of fluorescence channels comprises 40 or more fluorescence channels.
13. The method according to any one of the preceding clauses, wherein the plurality of fluorescence channels comprises at least one fluorescence channel for each of two or more emission spectrums.
14. The method according to clause 13, wherein the one or more light sources of the flow cytometer comprise a plurality of lasers, each laser emitting a different wavelength.
15. The method according to clause 14, wherein the plurality of lasers comprises at least one laser emitting in the ultraviolet (UV) spectrum, the violet spectrum, the blue spectrum, the green/yellow spectrum, and the red spectrum.
16. The method according to clauses 14 or 15, wherein the plurality of fluorescence channels comprises at least one fluorescence channel for each of two or more excitation spectrums.
17. The method according to clause 16, wherein each fluorescence channel of the plurality of fluorescence channels differs in its respective excitation or emission spectrum by 10 nm or more.
18. The method according to clauses 16 or 17, wherein for each laser of the flow cytometer the plurality of fluorescence channels is configured to detect a combined emission spectrum in a range from 20 nm or less longer than a wavelength of the laser to at least 810 nm.
19. The method according to any one of clauses 16 to 18, wherein for each laser of the flow cytometer the calibration set of bead populations comprises one or more fluorophores having an excitation spectrum including a wavelength of the laser and a combined emission spectrum that spans the full fluorescence spectrum from 20 nm or less longer than the wavelength of the laser to at least 810 nm.
20. The method according to any one of clauses 14 to 19, wherein the flow cytometer comprises 48 fluorescence channels and 5 lasers.
21. The method according to clause 20, wherein the 5 lasers comprise a laser emitting at 349 nm, 405 nm, 488 nm, 561 nm, and 637 nm.
22. The method according to clauses 20 or 21, wherein the flow cytometer comprises a BD FACSymphony^{™} A5 SE Cell Analyzer.
23. The method according to clause 22, wherein the calibration set of bead populations comprises 8 populations or less.
24. The method according to clause 23, wherein the fluorophores of the calibration set of bead populations comprise BUV395, BUV661, BV421, BV480, BV650, FITC, PE, and PE-Cy5.
25. The method according to any one of the preceding clauses, wherein a bead population of the calibration set comprises beads having:
   (i) a core;
   (ii) a fluorophore; and
   (iii) a linker attached to the fluorophore and configured to bind to the core.
26. The method according to clause 25, wherein the linker is bound to the core.
27. The method according to clause 26, wherein the fluorophore is covalently bound to the core via the linker.
28. The method according to clause 25 or 26, wherein the core comprises an antigen and the linker comprises an antibody.
29. The method according to any one of clauses 25 to 28, wherein the core comprises polystyrene.
30. The method according to any one of the preceding clauses, further comprising generating a set of standardized application settings for at least the portion of the plurality of fluorescence channels by calculating a quantitative fluorescence metric for each respective fluorescence channel and its corresponding highest fluorescence intensity bead population of the calibration set.
31. The method according to clause 30, wherein two or more flow cytometers of the same model are used to generate the set of standardized application settings.
32. The method according to clause 30 or 31, further comprising using the generated set of standardized application settings to compare data generated by different flow cytometers.
33. The method according to any one of clauses 30 to 32, further comprising using the generated set of standardized application settings to reduce variations across different flow cytometers.
34. A kit for calibrating a flow cytometer, the kit comprising a calibration set of bead populations according to any one of clauses 1 to 33.
35. The kit of clause 34, further comprising instructions for calibrating a flow cytometer according to the method of any one of clauses 1 to 33.
36. The kit of clause 35, wherein the instructions are stored on a non-transitory computer readable storage medium.
37. The kit of any one of clauses 34 to 36, further comprising a set of standardized application settings generated according to clause 30 or 31.
38. The kit of clause 37, wherein the set of standardized application settings are stored on a non-transitory computer readable storage medium.
39. A flow cytometer comprising:
   one or more light sources configured to irradiate beads in a flow stream of the flow cytometer;
   a plurality of fluorescence channels configured to generate data signals from light received from the irradiated beads;
   a processor comprising memory operably coupled to the processor wherein the memory comprises instructions stored thereon, which when executed by the processor, cause the processor to:
      (a) measure data signals generated by the plurality of fluorescence channels for a control composition comprising a calibration set of bead populations,
         wherein each bead population of the calibration set comprises a different fluorophore attached to a surface thereof and the calibration set comprises a number of bead populations less than the number of fluorescence channels;
      (b) calculate a quantitative metric of fluorescence intensity for each of at least a portion of the plurality of fluorescence channels based on the data signal generated for a bead population of the calibration set having the highest fluorescence intensity of the populations of the set for the fluorescence channel; and
      (c) adjust one or more fluorescence channels based on the quantitative fluorescence metric calculated for each of the one or more channels.
40. The flow cytometer according to clause 39, wherein the one or more fluorescence channels are adjusted such that a subsequent quantitative fluorescence metric calculated for each of the one or more channels is within a predetermined threshold value of a standardized application setting generated for the fluorescence channel and its corresponding highest fluorescence intensity bead population of the calibration set.
41. The flow cytometer according to clauses 39 or 40, wherein the adjusting comprises changing a voltage and/or an electronic gain setting of one or more fluorescence channels.
42. The flow cytometer according to any one of clauses 39 to 41, wherein each bead population of the calibration set has the highest fluorescence intensity of the bead populations of the set for at least one fluorescence channel of the flow cytometer.
43. The flow cytometer according to any one of clauses 39 to 42, wherein the quantitative metric of fluorescence intensity is the mean fluorescence intensity (MFI).
44. The flow cytometer according to clause 45, wherein the MFI calculated for each fluorescence channel is 1,000 or more.
45. The flow cytometer according to any one of clauses 39 to 44, wherein the flow cytometer is a spectral flow cytometer.
46. The flow cytometer according to any one of clauses 39 to 45, wherein the number of bead populations of the calibration set is half the number of fluorescence channels or less.
47. The flow cytometer according to clause 46, wherein the number of bead populations of the calibration set is a quarter of the number of fluorescence channels or less.
48. The flow cytometer according to clause 47, wherein the number of bead populations of the calibration set is an eighth of the number of fluorescence channels or less.
49. The flow cytometer according to any one of clauses 39 to 48, wherein the plurality of fluorescence channels comprises 10 or more fluorescence channels.
50. The flow cytometer according to clause 49, wherein the plurality of fluorescence channels comprises 40 or more fluorescence channels.
51. The flow cytometer according to any one of clauses 39 to 50, wherein the plurality of fluorescence channels comprises at least one fluorescence channel for each of two or more emission spectrums.
52. The flow cytometer according to clause 51, wherein the one or more light sources of the flow cytometer comprise a plurality of lasers, each laser configured to emit a different wavelength.
53. The flow cytometer according to clause 52, wherein the plurality of lasers comprises at least one laser configured to emit in the ultraviolet (UV) spectrum, the violet spectrum, the blue spectrum, the green/yellow spectrum, and the red spectrum.
54. The flow cytometer according to clauses 52 or 53, wherein the plurality of fluorescence channels comprises at least one fluorescence channel for each of two or more excitation spectrums.
55. The flow cytometer according to clause 54, wherein each fluorescence channel of the plurality of fluorescence channels differs in its respective excitation or emission spectrum by 10 nm or more.
56. The flow cytometer according to clauses 54 or 55, wherein for each laser of the flow cytometer the plurality of fluorescence channels is configured to detect a combined emission spectrum in a range from 20 nm or less longer than a wavelength of the laser to at least 810 nm.
57. The flow cytometer according to any one of clauses 54 to 56, wherein for each laser of the flow cytometer the calibration set of bead populations comprises one or more fluorophores having an excitation spectrum including a wavelength of the laser and a combined emission spectrum that spans the full fluorescence spectrum from 20 nm or less longer than the wavelength of the laser to at least 810 nm.
58. The flow cytometer according to any one of clauses 52 to 57, wherein the flow cytometer comprises 48 fluorescence channels and 5 lasers.
59. The flow cytometer according to clause 58, wherein the 5 lasers comprise a laser configured to emit at 349 nm, 405 nm, 488 nm, 561 nm, and 637 nm.
60. The flow cytometer according to clauses 58 or 59, wherein the flow cytometer comprises a BD FACSymphony^{™} A5 SE Cell Analyzer.
61. The flow cytometer according to clause 60, wherein the calibration set of bead populations comprises 8 populations or less.
62. The flow cytometer according to clause 61, wherein the fluorophores of the calibration set of bead populations comprise BUV395, BUV661, BV421, BV480, BV650, FITC, PE, and PE-Cy5.
63. The flow cytometer according to any one of clauses 39 to 62, wherein a bead population of the calibration set comprises beads having:
   (i) a core;
   (ii) a fluorophore; and
   (iii) a linker attached to the fluorophore and configured to bind to the core.
64. The flow cytometer according to clause 63, wherein the linker is bound to the core.
65. The flow cytometer according to clause 64, wherein the fluorophore is covalently bound to the core via the linker.
66. The flow cytometer according to clauses 63 or 64, wherein the core comprises an antigen and the linker comprises an antibody.
67. The flow cytometer according to any one of clauses 63 to 66, wherein the core comprises polystyrene.
68. The flow cytometer according to any one of clauses 39 to 67, wherein the memory further comprises instructions which, when executed by the processor, cause the processor to generate a set of standardized application settings for at least the portion of the plurality of fluorescence channels by calculating a quantitative fluorescence metric for each respective fluorescence channel and its corresponding highest fluorescence intensity bead population of the calibration set.
70. The flow cytometer according to clause 68, wherein the memory further comprises instructions which, when executed by the processor, cause the processor to use the generated set of standardized application settings to compare data generated by different flow cytometers.
71. The flow cytometer according to clauses 69 or 70, wherein the memory further comprises instructions which, when executed by the processor, cause the processor to use the generated set of standardized application settings to reduce variations across different flow cytometers.
72. A non-transitory computer readable storage medium comprising instructions stored thereon for calibrating a flow cytometer by a method comprising:
   (a) irradiating a control composition comprising a calibration set of bead populations with one or more light sources of the flow cytometer,
      wherein each bead population of the calibration set comprises a different fluorophore attached to a surface thereof and the calibration set comprises a number of bead populations less than the number of fluorescence channels of the flow cytometer;
   (b) measuring data signals generated by the plurality of fluorescence channels of the flow cytometer for the calibration set of bead populations;
   (c) calculating a quantitative metric of fluorescence intensity for each of at least a portion of the plurality of fluorescence channels based on the data signal generated for a bead population of the calibration set having the highest fluorescence intensity of the populations of the set for the fluorescence channel; and
   (d) adjusting one or more fluorescence channels based on the quantitative fluorescence metric calculated for each of the one or more channels.
73. The non-transitory computer readable storage medium according to clause 72, wherein the one or more fluorescence channels are adjusted such that a subsequent quantitative fluorescence metric calculated for each of the one or more channels is within a predetermined threshold value of a standardized application setting generated for the fluorescence channel and its corresponding highest fluorescence intensity bead population of the calibration set.
74. The non-transitory computer readable storage medium according to clauses 72 or 73, wherein the adjusting comprises changing a voltage and/or an electronic gain setting of one or more fluorescence channels.
75. The non-transitory computer readable storage medium according to any one of clauses 72 to 74, wherein each bead population of the calibration set has the highest fluorescence intensity of the bead populations of the set for at least one fluorescence channel of the flow cytometer.
76. The non-transitory computer readable storage medium according to any one of clauses 72 to 75, wherein the quantitative metric of fluorescence intensity is the mean fluorescence intensity (MFI).
77. The non-transitory computer readable storage medium according to clauses 76, wherein the MFI calculated for each fluorescence channel is 1,000 or more.
78. The non-transitory computer readable storage medium according to any one of clauses 72 to 77, wherein the flow cytometer is a spectral flow cytometer.
79. The non-transitory computer readable storage medium according to any one of clauses 72 to 78, wherein the number of bead populations of the calibration set is half the number of fluorescence channels or less.
80. The non-transitory computer readable storage medium according to clause 79, wherein the number of bead populations of the calibration set is a quarter of the number of fluorescence channels or less.
81. The non-transitory computer readable storage medium according to clause 80, wherein the number of bead populations of the calibration set is an eighth of the number of fluorescence channels or less.
82. The non-transitory computer readable storage medium according to any one of clauses 72 to 81, wherein the plurality of fluorescence channels comprises 10 or more fluorescence channels.
83. The non-transitory computer readable storage medium according to clause 82, wherein the plurality of fluorescence channels comprises 40 or more fluorescence channels.
84. The non-transitory computer readable storage medium according to any one of clauses 72 to 83, wherein the plurality of fluorescence channels comprises at least one fluorescence channel for each of two or more emission spectrums.
85. The non-transitory computer readable storage medium according to clause 84, wherein the one or more light sources of the flow cytometer comprise a plurality of lasers, each laser emitting a different wavelength.
86. The non-transitory computer readable storage medium according to clause 85, wherein the plurality of lasers comprises at least one laser emitting in the ultraviolet (UV) spectrum, the violet spectrum, the blue spectrum, the green/yellow spectrum, and the red spectrum.
87. The non-transitory computer readable storage medium according to clauses 85 or 86, wherein the plurality of fluorescence channels comprises at least one fluorescence channel for each of two or more excitation spectrums.
88. The non-transitory computer readable storage medium according to clause 87, wherein each fluorescence channel of the plurality of fluorescence channels differs in its respective excitation or emission spectrum by 10 nm or more.
89. The non-transitory computer readable storage medium according to clauses 87 or 88, wherein for each laser of the flow cytometer the plurality of fluorescence channels is configured to detect a combined emission spectrum in a range from 20 nm or less longer than a wavelength of the laser to at least 810 nm.
90. The non-transitory computer readable storage medium according to any one of clauses 87 to 89, wherein for each laser of the flow cytometer the calibration set of bead populations comprises one or more fluorophores having an excitation spectrum including a wavelength of the laser and a combined emission spectrum that spans the full fluorescence spectrum from 20 nm or less longer than the wavelength of the laser to at least 810 nm.
91. The non-transitory computer readable storage medium according to any one of clauses 85 to 90, wherein the flow cytometer comprises 48 fluorescence channels and 5 lasers.
92. The non-transitory computer readable storage medium according to clause 91, wherein the 5 lasers comprise a laser emitting at 349 nm, 405 nm, 488 nm, 561 nm, and 637 nm.
93. The non-transitory computer readable storage medium according to clause 91 or 92, wherein the flow cytometer comprises a BD FACSymphony^{™} A5 SE Cell Analyzer.
94. The non-transitory computer readable storage medium according to clause 93, wherein the calibration set of bead populations comprises 8 populations or less.
95. The non-transitory computer readable storage medium according to clause 94, wherein the fluorophores of the calibration set of bead populations comprise BUV395, BUV661, BV421, BV480, BV650, FITC, PE, and PE-Cy5.
96. The non-transitory computer readable storage medium according to any one of clauses 72 to 95, wherein a bead population of the calibration set comprises beads having:
   (i) a core;
   (ii) a fluorophore; and
   (iii) a linker attached to the fluorophore and configured to bind to the core.
97. The non-transitory computer readable storage medium according to clause 96, wherein the linker is bound to the core.
98. The non-transitory computer readable storage medium according to clause 97, wherein the fluorophore is covalently bound to the core via the linker.
99. The non-transitory computer readable storage medium according to clauses 96 or 97, wherein the core comprises an antigen and the linker comprises an antibody.
100. The non-transitory computer readable storage medium according to any one of clauses 96 to 99, wherein the core comprises polystyrene.
101. The non-transitory computer readable storage medium according to any one of clauses 72 to 100, further comprising generating a set of standardized application settings for at least the portion of the plurality of fluorescence channels by calculating a quantitative fluorescence metric for each respective fluorescence channel and its corresponding highest fluorescence intensity bead population of the calibration set. 102. The non-transitory computer readable storage medium according to clause 101, wherein two or more flow cytometers of the same model are used to generate the set of standardized application settings.
103. The non-transitory computer readable storage medium according to clauses 101 or 102, further comprising using the generated set of standardized application settings to compare data generated by different flow cytometers.
104. The non-transitory computer readable storage medium according to any one of clauses 101 to 103, further comprising using the generated set of standardized application settings to reduce variations across different flow cytometers.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its scope. Furthermore, all examples and conditional language recited herein are principally intended to aid the reader in understanding the principles of the disclosure and the concepts contributed by the inventors to furthering the art, and are to be construed as being without limitation to such specifically recited examples and conditions. Moreover, all statements herein reciting principles, aspects, and embodiments of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present disclosure, therefore, is not intended to be limited to the exemplary embodiments shown and described herein. Rather, the scope of present disclosure is embodied by the appended claims.

## Claims

1. A method of calibrating a flow cytometer comprising a plurality of fluorescence channels, the method comprising:
(a) irradiating a control composition comprising a calibration set of bead populations with one or more light sources of the flow cytometer,
wherein each bead population of the calibration set comprises a different fluorophore attached to a surface thereof and the calibration set comprises a number of bead populations that is less than the number of fluorescence channels of the flow cytometer;
(b) measuring data signals generated by the plurality of fluorescence channels of the flow cytometer for the calibration set of bead populations;
(c) calculating a quantitative metric of fluorescence intensity for each of at least a portion of the plurality of fluorescence channels based on the data signal generated for a bead population of the calibration set having the highest fluorescence intensity of the populations of the set for the fluorescence channel; and
(d) adjusting one or more fluorescence channels based on the quantitative fluorescence metric calculated for each of the one or more channels.

2. The method according to claim 1, wherein the one or more fluorescence channels are adjusted such that a subsequent quantitative fluorescence metric calculated for each of the one or more channels is within a predetermined threshold value of a standardized application setting generated for the fluorescence channel and its corresponding highest fluorescence intensity bead population of the calibration set.

3. The method according to claim 1 or 2, wherein the adjusting comprises changing a voltage and/or an electronic gain setting of one or more fluorescence channels.

4. The method according to any one of claims 1 to 3, wherein each bead population of the calibration set has the highest fluorescence intensity of the populations of the set for at least one fluorescence channel of the flow cytometer.

5. The method according to any one of the preceding claims, wherein the quantitative metric of fluorescence intensity is the mean fluorescence intensity (MFI).

6. The method according to any one of the preceding claims, wherein the flow cytometer is a spectral flow cytometer.

7. The method according to any one of the preceding claims, wherein the number of bead populations of the calibration set is half the number of fluorescence channels or less.

8. The method according to any one of the preceding claims, wherein the plurality of fluorescence channels comprises at least one fluorescence channel for each of two or more emission spectrums.

9. The method according to any one of the preceding claims, wherein a bead population of the calibration set comprises beads having:
(i) a core;
(ii) a fluorophore; and
(iii) a linker attached to the fluorophore and configured to bind to the core.

10. The method according to any one of the preceding claims, further comprising generating a set of standardized application settings for at least the portion of the plurality of fluorescence channels by calculating a quantitative fluorescence metric for each respective fluorescence channel and its corresponding highest fluorescence intensity bead population of the calibration set.

11. The method according to claim 10, wherein two or more flow cytometers of the same model are used to generate the set of standardized application settings.

12. The method according to claim 10 or 11, further comprising using the generated set of standardized application settings to compare data generated by different flow cytometers.

13. The method according to any one of claims 10 to 12, further comprising using the generated set of standardized application settings to reduce variations across different flow cytometers.

14. A kit for calibrating a flow cytometer, the kit comprising a calibration set of bead populations according to any one of claims 1 to 13.

15. A flow cytometer comprising:
one or more light sources configured to irradiate beads in a flow stream of the flow cytometer;
a plurality of fluorescence channels configured to generate data signals from light received from the irradiated beads;
a processor comprising memory operably coupled to the processor wherein the memory comprises instructions stored thereon, which when executed by the processor, cause the processor to:
(a) measure data signals generated by the plurality of fluorescence channels for a control composition comprising a calibration set of bead populations,
wherein each bead population of the calibration set comprises a different fluorophore attached to a surface thereof and the calibration set comprises a number of bead populations less than the number of fluorescence channels;
(b) calculate a quantitative metric of fluorescence intensity for each of at least a portion of the plurality of fluorescence channels based on the data signal generated for a bead population of the calibration set having the highest fluorescence intensity of the populations of the set for the fluorescence channel; and
(c) adjust one or more fluorescence channels based on the quantitative fluorescence metric calculated for each of the one or more channels.
